(19) Europäisches Patentamt

European Patent Office

Office européen des brevets

(11) **EP 4 733 258 A1**

(12) **EUROPEAN PATENT APPLICATION**

(43) Date of publication:
29.04.2026 Bulletin 2026/18

(21) Application number: 25208482.7

(22) Date of filing: **14.10.2025**

(51) International Patent Classification (IPC):
**C01B 39/02** (2006.01) **B01J 29/064** (2006.01)
**B01J 29/70** (2006.01) **B01J 37/08** (2006.01)
**C01B 39/48** (2006.01)

(52) Cooperative Patent Classification (CPC):
**C01B 39/48; B01J 29/064; B01J 29/7007;
B01J 37/08; C01B 39/026**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 25.10.2024 JP 2024188000
29.07.2025 JP 2025126395

(71) Applicant: **Tosoh Corporation**
**Yamaguchi 746-8501 (JP)**

(72) Inventors:
• **YAMASAKI, Yoshitaka**
**Shunan-shi, 746-8501 (JP)**
• **CHEN, Ning**
**Shunan-shi, 746-8501 (JP)**
• **AOYAMA, Hidekazu**
**Shunan-shi, 746-8501 (JP)**
• **USUI, Toyohiro**
**Shunan-shi, 746-8501 (JP)**
• **NAKAO, Keita**
**Shunan-shi, 746-8501 (JP)**

(74) Representative: **TBK**
**Bavariaring 4-6**
**80336 München (DE)**

(54) **BETA ZEOLITE AND METHOD FOR MANUFACTURING THE SAME**

(57) [Object] To provide at least one of a beta zeolite having excellent catalytic activity and hydrothermal durability or a method for manufacturing it.

[Solution] A beta zeolite having a total alkali metal content of 0.5% by mass or less, an SDA content of 4.0% by mass or less, a silica-to-alumina molar ratio of 20 or greater and 35 or less and a ratio of the height intensity of a peak having its peak top at $3735 \pm 10\,\mathrm{cm}^{-1}$ to the height intensity of a peak having its peak top at $1860 \pm 10\,\mathrm{cm}^{-1}$ in an IR spectrum of 1.90 or less.

**EP 4 733 258 A1**

**Description**

[Technical Field]

The present disclosure relates to a beta zeolite and a method for manufacturing it.

[Background Art]

Beta zeolites are industrially used in various fields as catalysts. Among beta zeolites, beta zeolites having a low silica-to-alumina molar ratio (hereinafter also referred to as "$SiO_2/Al_2O_3$ molar ratio") (e.g., zeolites having a $SiO_2/Al_2O_3$ molar ratio of 40 or less), in particular, have high catalytic activity. For this reason, beta zeolites having a low $SiO_2/Al_2O_3$ molar ratio (hereinafter also referred to as "low-silica beta zeolites") are used in various catalytic applications, such as catalysts for decomposing nitrogen oxides (NOx) using a reducing agent (e.g., ammonia ($NH_3$)) (hereinafter also referred to as "nitrogen oxides-reducing catalysts") (e.g., PTL 1).

Beta zeolites used in catalytic applications, such as nitrogen oxides-reducing catalysts, are typically synthesized by crystallizing a source material containing an organic structure-directing agent (hereinafter also referred to as "SDA") and an alkali metal. In a beta zeolite synthesized by such a method, however, the SDA and the alkali metal are contained. The SDA contained in the beta zeolite is present primarily in the pores in the beta zeolite, and the alkali metal contained in the beta zeolite is present primarily as counterions for compensating for the charge in the framework structure (hereinafter also simply referred to as "counterions").

The SDA contained in the beta zeolite may inhibit contact between the beta zeolite and the reaction substrate, reducing the catalytic activity and adsorption properties of the beta zeolite. It is, furthermore, known that the crystal structure of a beta zeolite is easily broken when the beta zeolite is exposed to a high-temperature atmosphere containing steam in a state containing an alkali metal. When a beta zeolite is used in a catalytic application, therefore, it is common to perform a treatment for removing the SDA and the alkali metal from the synthesized beta zeolite, thereby reducing the SDA and alkali metal content (e.g., PTL 1).

To remove the SDA and the alkali metal from a synthesized beta zeolite, it is common to perform a first firing treatment for removing the SDA, then bring the zeolite into contact with an ammonium-containing solution to exchange alkali metal ions with ammonium ions and then perform a second firing treatment for replacing the ammonium ions with protons (e.g., PTL 1).

Nitrogen oxides-reducing catalysts and other catalysts, furthermore, may be used to decompose predetermined components contained in a high-temperature gas containing steam (e.g., nitrogen oxides in exhaust gas emitted from an internal combustion engine). For this reason, a beta zeolite intended for use as a catalyst is required to have not only high catalytic activity but also high hydrothermal durability. Zeolites, however, have a characteristic in which they become more likely to contain an increased amount of silanol, which forms defects in the framework structure (hereinafter also referred to as "silanol defects"), and more likely to experience collapse of the framework structure starting from the silanol defects, as the aluminum content increases. Low-silica beta zeolites, therefore, have the problem of low hydrothermal durability and a likelihood of exhibiting reduced catalytic activity in a high-temperature atmosphere containing steam, although they have excellent catalytic activity.

In view of such circumstances, methods for improving the hydrothermal durability of beta zeolites have been investigated in recent years. For example, in NPL 1, a treatment in which a beta zeolite is fired in an atmosphere containing steam (hereinafter also referred to as "steaming") is used to condense silanol defects, thereby improving hydrothermal durability.

[Citation List]

[Patent Literature]

[PTL 1] Japanese Unexamined Patent Application Publication No. 2021-146226

[Non Patent Literature]

[NPL 1] J. Phys. Chem. C 2011, 115, 8005-8013

[Summary of Invention]

[Technical Problem]

As described in PTL 1, by removing the SDA and the alkali metal from a synthesized beta zeolite, a beta zeolite suitable for catalytic applications can be obtained. However, a beta zeolite obtained using the method of PTL 1 (the method of performing a first firing treatment for removing the SDA, then bringing the zeolite into contact with an ammonium-containing solution to exchange alkali metal ions with ammonium ions and then performing a second firing treatment for replacing the ammonium ions with protons) contains an increased amount of silanol defects as a result of a reduced $SiO_2/Al_2O_3$ molar ratio (i.e., an increased amount of aluminum). Low-silica beta zeolites obtained using the method in PTL 1, therefore, have the problem of insufficient hydrothermal durability.

Meanwhile, by subjecting a beta zeolite to steaming as in NPL 1, silanol defects can be reduced, whereby the hydrothermal durability of the beta zeolite can be improved. In this method, however, aluminum in the framework structure, which serves as catalytically active sites, becomes desorbed simultaneously with the reduction of silanol defects. Low-silica beta zeolites obtained using the method of NPL 1, therefore, have the problem of insufficient catalytic activity.

An object of the present disclosure is to provide at least one of a beta zeolite having excellent catalytic activity and hydrothermal durability or a method for manufacturing it.

[Solution to Problem]

Regarding low-silica beta zeolites, the inventors conducted investigations focusing on the series of treatments from crystallization of the source material to removal of the SDA and the alkali metal to combine catalytic activity with hydrothermal durability, between which there has been a trade-off in the known methods (the methods of PTL 1 and NPL 1). As a result, the inventors found that by removing the SDA and the alkali metal by a predetermined method from a low-silica beta zeolite synthesized by a predetermined method, silanol defects can be reduced without significant impact on aluminum in the framework structure, which serves as catalytically active sites. The inventors also found that a low-silica beta zeolite obtained in such a manner exhibits excellent catalytic activity and hydrothermal durability, thereby completing the present invention.

The present invention, therefore, is as in the claims, and the gist of the present disclosure is as follows.

[1] A beta zeolite having a total alkali metal content of 0.5% by mass or less, an organic structure-directing agent content of 4.0% by mass or less, a silica-to-alumina molar ratio of 20 or greater and 35 or less and a ratio of height intensity of a peak having a peak top at $3735 \pm 10\ cm^{-1}$ to height intensity of a peak having a peak top at $1860 \pm 10\ cm^{-1}$ in an IR spectrum of 1.90 or less.

[2] The beta zeolite according to [1] above, wherein a half-width of an X-ray diffraction peak having a peak top at d = $3.95 \pm 0.10$ Å in an X-ray diffraction pattern obtained using CuK$\alpha$ radiation as an X-ray source is $2\theta = 0.475°$ or less.

[3] The beta zeolite according to [1] or [2] above, wherein a total amount of acid sites is 0.75 mmol/g or more and 1.70 mmol/g or less.

[4] The beta zeolite according to any one of [1] to [3] above, wherein an average crystal size is 0.70 $\mu$m or less.

[5] A method for manufacturing the beta zeolite according to any one of [1] to [4] above, the method comprising a step of crystallizing a composition containing a silica source, an alumina source, a potassium source, an organic structure-directing agent source and water and having a silica-to-alumina molar ratio of 20 or greater and 60 or less and a fluorine-to-silica molar ratio of 0.01 or less to obtain a crystallized material, a step of bringing the crystallized material and an ammonium-containing solution into contact to obtain an acid-treated material and a step of firing the acid-treated material at 400°C or above and 800°C or below in an atmosphere in which steam constitutes less than 5% by volume.

[Advantageous Effects of Invention]

According to the present disclosure, at least one of a beta zeolite having excellent catalytic activity and hydrothermal durability or a method for manufacturing it can be provided.

[Description of Embodiments]

In the following, a beta zeolite according to the present disclosure will be described by presenting an example of an embodiment. The present disclosure encompasses any combination of the configurations and parameters disclosed herein and also encompasses any combination of the upper limits and lower limits of values disclosed herein.

The terms in this embodiment are as specified below.

A "zeolite" is a compound having an ordered structure in which framework atoms (Hereinafter also referred to as "T atoms.") are arranged with oxygen (O) interposed therebetween, and is a compound in which the T atoms are at least metal atoms and/or metalloid atoms. The metal atoms can be, for example, one or more selected from the group of aluminum (Al), iron (Fe) and gallium (Ga), with aluminum being preferred. The metalloid atoms can be, for example, one or more selected from the group of boron (B), silicon (Si), germanium (Ge), arsenic (As), antimony (Sb) and tellurium (Te), with silicon being preferred.

A "zeotype" is a compound having an ordered structure in which T atoms are arranged with oxygen interposed therebetween, and is a compound in which the T atoms include at least atoms other than metal or metalloid atoms (Hereinafter also referred to as "nonmetal atoms."). Examples of nonmetal atoms include phosphorus (P). Examples of zeotypes include complex phosphorus compounds, such as aluminophosphates (AlPOs) and silicoaluminophosphates (SAPOs). In this embodiment, zeolites are distinguished from zeotypes.

The "ordered structure in which T atoms are arranged with oxygen interposed therebetween (Hereinafter also referred to as "zeolite structure.")" in the context of a zeolite or zeotype is a framework structure identified by a framework type code assigned by the Structure Commission of the International Zeolite Association (Hereinafter also referred to simply as "framework type code."). It should be noted that in this embodiment, framework type codes include the framework type codes of polymorphs listed on the website of the International Zeolite Association, "http://www.iza-s tructure.org/databases/." For example, the beta structure, which is the framework structure of beta zeolites, is a framework structure identified as the framework type code "Beta" and is an intergrowth framework structure containing polymorph Beta_A and polymorph Beta_B in any proportions. Through comparison with the XRD patterns of structures presented in Collection of simulated XRD powder patterns for zeolites, Fifth revised edition (2007) (Hereinafter also referred to as "reference patterns."), the zeolite structure can be identified. In this embodiment, framework structure, crystal structure and crystal phase are used interchangeably with each other.

An "aluminosilicate" is a complex oxide having a structure composed of repeated networks of aluminum (Al) and silicon (Si) with oxygen (O) interposed therebetween. In this embodiment, forms in which the oxide has a structure composed of repeated networks of aluminum (Al) and silicon (Si) with oxygen (O) interposed therebetween and in which part of the aluminum (e.g., 30% or less of aluminum as T atoms) has been replaced with another kind of metal atom are also regarded as aluminosilicates. Of aluminosilicates, those having crystalline powder X-ray diffraction (Hereinafter also referred to as "XRD.") peaks in their XRD patterns are "crystalline aluminosilicates," and those having no crystalline XRD peak are "amorphous aluminosilicates." It should be noted that zeolites in which the T atoms are aluminum (Al) and silicon (Si) fall under the category of crystalline aluminosilicates, and zeolites in which part of the aluminum (e.g., 30% or less of aluminum as T atoms) has been replaced with another kind of metal atom also fall under the category of crystalline aluminosilicates.

An XRD pattern in this embodiment is measured using CuK$\alpha$ radiation as the X-ray source. An example of measurement conditions is the following conditions.

Accelerating current and voltage: 40 mA and 40 kV
X-ray source: CuK$\alpha$ radiation ($\lambda$ = 1.5405 Å)
Measurement mode: Continuous scanning
Scan condition: 40°/minute
Measurement range: 2$\theta$ = 3° to 43°
Vertical divergence-limiting slit: 10 mm
Divergence/Incident slits: 1°
Receiving slit: Open
Receiving Soller slit: 5°
Detector: Semiconductor detector (D/teX Ultra)
Filter: Ni filter

The XRD pattern can be measured using a commonly used powder X-ray diffractometer (e.g., Ultima IV, manufactured by Rigaku Corporation). The crystalline XRD peaks, furthermore, are peaks that are detected with identified peak-top 2$\theta$ in an analysis of the XRD pattern using commonly used analysis software (e.g., SmartLab Studio II, manufactured by Rigaku Corporation). An example of conditions for the analysis of the XRD pattern is the following conditions.

Fitting conditions: Automatic, background refined A variance pseudo-Voigt function (peak profile)
Background subtraction method: Fitting method
K$\alpha$2 elimination method: K$\alpha$1/K$\alpha$2 ratio = 0.497
Smoothing method: B-Spline curve
Smoothing conditions: Second derivative method; $\sigma$ cutoff = 3; $\chi$ threshold = 1.5

A chemical formulation in this embodiment, such as the SiO$_2$/Al$_2$O$_3$ molar ratio, can be measured by ICP analysis using a commonly used inductively coupled plasma emission spectrometer (e.g., OPTIMA 7300DV, manufactured by PERKIN ELMER, INC.).

The "average crystal size" is the average of the particle sizes of primary particles. The primary particles are smallest unit particles independently observed in a scanning electron microscope (Hereinafter also referred to as "SEM.") observation performed under the following conditions. The SEM observation can be performed using a commonly used scanning electron microscope (e.g., instrument name: JSM-IT200, manufactured by JEOL Ltd.)

Acceleration voltage: 6 kV
Magnification: 10,000 $\pm$ 5,000 times

The average crystal size can be determined by measuring the maximum Feret diameters of independently observed smallest unit particles (primary particles) and calculating the arithmetic mean of 50 $\pm$ 5 particles. In this embodiment, the "maximum Feret diameter" is a value across which the distance between two parallel lines sandwiching the independently observed smallest unit particle (primary particle) reaches its maximum. However, secondary aggregate particles (aggregates), which are aggregated forms of primary particles, are handled as particles that are not independent and are not used in the calculation of the average crystal size. The number of SEM observation images used to determine the average crystal size, furthermore, can be any number with which the above-specified number of primary particles can be observed; one or two or more SEM observation images can be used.

The "silanol intensity ratio" is the ratio of the height intensity of a peak having its peak top at 3735 $\pm$ 10 cm$^{-1}$ (3725 cm$^{-1}$ or more and 3745 cm$^{-1}$ or less) to the height intensity of a peak having its peak top at 1860 $\pm$ 10 cm$^{-1}$ (1850 cm$^{-1}$ or more and 1870 cm$^{-1}$ or less) in an IR spectrum. The "silanol intensity ratio" is a measure of the amount of silanol defects in a beta zeolite, and lower silanol intensity ratios indicate smaller amounts of silanol defects. The silanol intensity ratio can be determined from an IR spectrum obtained by Fourier-transform infrared spectroscopy (hereinafter also referred to as "FT-IR") using a commonly used Fourier-transform infrared spectrometer (hereinafter also referred to as "FT-IR analyzer") (e.g., analyzer name: Jasco FT/IR-6100, manufactured by JASCO Corporation). The FT-IR for measuring the IR spectrum can be performed by shaping a sample (beta zeolite) into a disk (0.01 g/cm$^2$) using a press machine, inserting the disk into a heating unit (e.g., device name: 2000-1431 standard light-path spectroscopic IN-SITU cell, manufactured by Makuhari Rikagaku Garasu Inc.), carrying out pretreatment under the conditions of 450°C (sample temperature) for 1 hour in a vacuum and then performing measurement under the following conditions

Measurement method: Heated transmission
Sample for measurement: 0.01 g
Measurement mode: Continuous scanning
Measuring temperature: 200°C (sample temperature) in a vacuum
Measurement range: 350 to 4000 cm$^{-1}$
Resolution: 2.0 cm$^{-1}$
Number of scans: 128
Zero filling: ON
Detector: TGS (Triglycine sulfate)

To determine the silanol intensity ratio from the IR spectrum obtained, waveform processing can be performed using commonly used analysis software (e.g., Spectra Manager Version 2 Version 2.15.11, manufactured by JASCO Corporation). More specifically, baseline processing is carried out by defining a baseline start as 1580 cm$^{-1}$ and a baseline end as 2100 cm$^{-1}$, defining a baseline start as 3000 cm$^{-1}$ and a baseline end as 3800 cm$^{-1}$ and subjecting these ranges to baseline correction. Then, in the IR spectrum after baseline processing, the peak having the highest peak-top height intensity is determined from among peaks having their peak top within the range of 1860 $\pm$ 10 cm$^{-1}$ (hereinafter also referred to as "peak $P_1$"), and the peak having the highest peak-top height intensity is determined from among peaks having their peak top within the range of 3735 $\pm$ 10 cm$^{-1}$ (hereinafter also referred to as "peak $P_2$"). The silanol intensity ratio can be determined using the peak-top height intensity of the determined peak $P_1$ (hereinafter also referred to as "height intensity $HI_1$") and the peak-top height intensity of the determined peak $P_2$ (hereinafter also referred to as "height intensity $HI_2$") according to equation (1) below.

Silanol intensity ratio = (Height intensity $HI_2$ of peak $P_2$)/(Height intensity $HI_1$ of peak $P_1$)        (1)

It should be noted that in the IR spectrum measured using a Fourier-transform infrared spectrometer, peak $P_1$, which has its peak top at 1860 $\pm$ 10 cm$^{-1}$, is a peak derived from skeletal vibration in the beta zeolite, and peak $P_2$, which has its peak top at 3735 $\pm$ 10 cm$^{-1}$, is a peak derived from silanol contained in the beta zeolite. That is, the silanol intensity ratio is the amount of silanol defects contained in the entire beta zeolite quantified based on skeletal vibration in the zeolite and functions as a measure of the amount of silanol defects.

<Beta Zeolite>

In the following, a beta zeolite according to this embodiment will be described.

The beta zeolite according to this embodiment has a total alkali metal content of 0.5% by mass or less, an organic structure-directing agent content (SDA content) of 4.0% by mass or less, a $SiO_2/Al_2O_3$ molar ratio of 20 or greater and 35 or less and a silanol intensity ratio of 1.90 or less. By virtue of having such features, the beta zeolite according to this embodiment can exhibit excellent catalytic activity and hydrothermal durability.

The beta zeolite according to this embodiment has a $SiO_2/Al_2O_3$ molar ratio of 20 or greater and 35 or less. By virtue of having a $SiO_2/Al_2O_3$ molar ratio of 20 or greater and 35 or less, the beta zeolite according to this embodiment can exhibit excellent catalytic activity and hydrothermal durability. When the $SiO_2/Al_2O_3$ molar ratio is less than 20, hydrothermal durability is reduced. When the $SiO_2/Al_2O_3$ molar ratio exceeds 35, by contrast, the total amount of acid sites, which will be described later, is likely to be low, which may result in reduced catalytic activity (e.g., nitrogen oxides-reducing properties). Although the $SiO_2/Al_2O_3$ molar ratio of the beta zeolite according to this embodiment only needs to be 20 or greater and 35 or less, it is preferred that the $SiO_2/Al_2O_3$ molar ratio be 20 or greater, 21 or greater or 22 or greater, and it is preferred that the $SiO_2/Al_2O_3$ molar ratio be 35 or less, 32 or less or 30 or less, because in these cases further improvement in catalytic activity and hydrothermal durability can be expected. These upper limits and lower limits to the $SiO_2/Al_2O_3$ molar ratio can be in any combination. More preferably, however, the $SiO_2/Al_2O_3$ molar ratio of the beta zeolite according to this embodiment is 20 or greater and 32 or less because in that case further improvement in catalytic activity and hydrothermal durability can be expected. More preferably, the $SiO_2/Al_2O_3$ molar ratio is 20 or greater and 30 or less.

The beta zeolite according to this embodiment may contain T atoms other than aluminum (Al) and silicon (Si), as long as its $SiO_2/Al_2O_3$ molar ratio is 20 or greater and 35 or less. It is, however, preferred that the beta zeolite be a crystalline aluminosilicate because in that case further improvement in catalytic activity and hydrothermal durability can be expected. Preferably, the beta zeolite is a crystalline aluminosilicate in which aluminum (Al) and silicon (Si) are the only T atoms.

The beta zeolite according to this embodiment has a silanol intensity ratio of 1.90 or less. By virtue of having a silanol intensity ratio of 1.90 or less, the beta zeolite according to this embodiment can exhibit excellent catalytic activity and hydrothermal durability. When the silanol intensity ratio exceeds 1.90, by contrast, structural defects are numerous, resulting in reduced hydrothermal durability of the beta zeolite. Although the silanol intensity ratio of the beta zeolite according to this embodiment only needs to be 1.90 or less, it is preferred that the silanol intensity ratio be 1.85 or less or 1.80 or less because in that case further improvement in hydrothermal durability can be expected. The lower limit to the silanol intensity ratio is not particularly limited, but by way of example, the silanol intensity ratio may be greater than 0, 0.30 or more, 0.50 or more or 0.90 or more due to the presence of inevitable structural defects. These upper limits and lower limits to the silanol intensity ratio can be in any combination. Preferably, however, the silanol intensity ratio of the beta zeolite according to this embodiment is greater than 0 and 1.90 or less because in that case further improvement in hydrothermal durability can be expected. More preferably, the silanol intensity ratio is 0.30 or greater and 1.85 or less, even more preferably 0.5 or greater and 1.80 or less.

The beta zeolite according to this embodiment has a total alkali metal content of 0.5% by mass or less. By virtue of having a total alkali metal content of 0.5% by mass or less, the beta zeolite according to this embodiment can be less susceptible to destruction of its crystal structure by alkali metals in a high-temperature atmosphere containing steam, whereby it can exhibit excellent hydrothermal durability. When the total alkali metal content exceeds 0.5% by mass, by contrast, the destruction of the crystal structure by alkali metals in a high-temperature atmosphere containing steam is accelerated, resulting in reduced hydrothermal durability.

Although the total alkali metal content of the beta zeolite according to this embodiment only needs to be 0.5% by mass or less, it is preferred that the total alkali metal content be 0.30% by mass or less because in that case further improvement in hydrothermal durability can be expected. More preferably, the total alkali metal content is 0.28% by mass or less, even more preferably 0.20% by mass or less. The lower limit to the total alkali metal content is not particularly limited, but by way of example, the total alkali metal content may be 0% by mass or more, more than 0% by mass or 0.01% by mass or more due to the presence of inevitable alkali metals. These upper limits and lower limits to the total alkali metal content can be in any combination. Preferably, however, the total alkali metal content of the beta zeolite according to this embodiment is 0% by mass or more and 0.5% by mass or less because in that case further improvement in hydrothermal durability can be expected. More preferably, the total alkali metal content is 0% by mass or more and 0.30% by mass or less, even more preferably 0.01% by mass or more and 0.20% by mass or less. It should be noted that in this embodiment, when the amount of a predetermined component is 0% by mass, it means that the predetermined component is not contained.

The total alkali metal content is the percentage of the amount of alkali metals (M) measured as $M_2O$ relative to the total amount of the amount of silicon (Si) measured as $SiO_2$, the amount of aluminum (Al) measured as $Al_2O_3$ and the

amount of alkali metals (M) measured as $M_2O$ in the beta zeolite and can be determined according to equation (2) below.

Total alkali metal content [% by mass] = {$M_2O$/($SiO_2$ + $Al_2O_3$ + $M_2O$)} $\times$ 100 (2)

In equation (2) above, $M_2O$ denotes the amount [g] of alkali metals (M) measured as $M_2O$, $SiO_2$ denotes the amount [g] of silicon (Si) measured as $SiO_2$, and $Al_2O_3$ denotes the amount [g] of aluminum (Al) measured as $Al_2O_3$.

It should be noted that when two or more alkali metals are contained in the beta zeolite, $M_2O$ in equation (2) above can be the total of the amount of each alkali metal (M) measured as $M_2O$. For example, when sodium and potassium are contained as alkali metals in the beta zeolite, the total alkali metal content can be determined according to equation (2') below.

Total alkali metal content [% by mass] = { ($Na_2O$ + $K_2O$)/($SiO_2$ + $Al_2O_3$ + $Na_2O$ + $K_2O$)} $\times$ 100 (2')

In equation (2') above, $SiO_2$ and $Al_2O_3$ are synonymous with $SiO_2$ and $Al_2O_3$, respectively, in equation (2) above, $Na_2O$ denotes the amount [g] of sodium measured as $Na_2O$, and $K_2O$ denotes the amount [g] of potassium measured as $K_2O$.

Alkali metals that can be contained in the beta zeolite according to this embodiment are not particularly limited. It is, however, preferred that at least potassium be contained. One alkali metal may be contained alone in the beta zeolite according to this embodiment, or two or more alkali metals may be contained. It is, however, preferred that one alkali metal be contained. Preferably, potassium is the only alkali metal contained.

The beta zeolite according to this embodiment has an SDA content of 4.0% by mass or less. By virtue of having an SDA content of 4.0% by mass or less, the beta zeolite according to this embodiment can be less susceptible to inhibition, by the SDA, of contact with the reaction substrate, whereby it can exhibit excellent catalytic activity. When the SDA content exceeds 4.0% by mass, by contrast, the SDA inhibits contact with the reaction substrate, resulting in reduced catalytic activity.

Although the SDA content of the beta zeolite according to this embodiment only needs to be 4.0% by mass or less, it is preferred that the SDA content be 3.0% by mass or less, 2.5% by mass or less, 2.3% by mass or less, 2.0% by mass or less or 1.5% by mass or less because in that case further improvement in catalytic activity can be expected. The lower limit to the SDA content is not particularly limited, but by way of example, the SDA content may be 0% by mass or more, more than 0% by mass or 0.01% by mass or more because in that case contact between the beta zeolite and the reaction substrate is not inhibited. These upper limits and lower limits to the SDA content can be in any combination. Preferably, however, the SDA content of the beta zeolite according to this embodiment is 0% by mass or more and 3.0% by mass or less because in that case further improvement in catalytic activity can be expected. More preferably, the SDA content is 0% by mass or more and 2.5% by mass or less, even more preferably 0% by mass or more and 2.3% by mass or less, particularly preferably 0% by mass or more and 2.0% by mass or less, the most preferably 0% by mass or more and 1.5% by mass or less.

The SDA content can be determined by dividing the mass of the SDA contained in the beta zeolite (hereinafter also referred to as "SDA mass") by the mass of the beta zeolite (hereinafter also referred to as "Beta mass") and converting the result to a percentage. The Beta mass for determining the SDA content can be the dry mass of the beta zeolite dried at 110°C for 4 hours in air atmosphere. The SDA mass for determining the SDA content, furthermore, can be the change in mass that occurs when the beta zeolite is heated from 300°C to 700°C. The change in mass that occurs when the beta zeolite is heated can be measured using a commonly used differential thermogravimetric analyzer (e.g., STA 2500 Regulus, manufactured by NETZSCH) under the following conditions.

Atmosphere: Air
Atmosphere flow rate: 20 cc/minute
Temperature elevation rate: 10°C/minute
Measuring temperature: 20°C to 800°C

It should be noted that in this embodiment, a change in the mass (decrease in the mass) of the beta zeolite that occurs until reaching 300°C is considered a change in mass derived from desorption of adsorbed water, and a change in the mass (decrease in the mass) of the beta zeolite that occurs after exceeding 700°C is considered a change in mass derived from silanol condensation at the interface between polymorphs in the beta zeolite. In this embodiment, therefore, a change in the mass (decrease in the mass) of the beta zeolite that occurs during heating from 300°C to 700°C is considered a change in mass derived from at least one of decomposition or combustion of the SDA.

Although not particularly limited, the beta zeolite according to this embodiment preferably has an average crystal size of 0.20 $\mu$m or more, 0.22 $\mu$m or more or 0.24 $\mu$m or more. With an average crystal size of 0.20 $\mu$m or more, further

improvement in hydrothermal durability can be expected. Although not particularly limited, furthermore, the beta zeolite according to this embodiment preferably has an average crystal size of 1.00 μm or less, 0.80 μm or less, 0.70 μm or less, 0.50 μm or less or 0.35 μm or less because in that case the diffusion of the reaction substrate during the catalytic reaction is improved, whereby further improvement in catalytic activity can be expected. In particular, in the case of a beta zeolite having an average crystal size of 0.70 μm or less, compared with a beta zeolite having an average crystal size exceeding 0.70 μm, the alkali metal content and the silanol intensity ratio are more likely to decrease during its manufacturing process, and thus further improvement in hydrothermal durability can be expected in addition to improvement in catalytic activity. These upper limits and lower limits to the average crystal size can be in any combination. Preferably, however, the average crystal size of the beta zeolite according to this embodiment is 0.20 μm or more and 1.00 μm or less, 0.20 μm or more and 0.80 μm or less, 0.20 μm or more and 0.70 μm or less, 0.20 μm or more and 0.50 μm or less, 0.20 μm or more and 0.35 μm or less or 0.22 μm or more and 0.35 μm or less.

Although not particularly limited, for the beta zeolite according to this embodiment, it is preferred that the half-width of the XRD peak having the highest peak-top height intensity among XRD peaks having their peak top at d = 3.95 ± 0.10 Å in an XRD pattern obtained using CuKα radiation as the X-ray source (Hereinafter also referred to as "XRD main peak.") be 2θ = 0.475° or less. When this XRD main peak has a half-width of 2θ = 0.475° or less, the beta zeolite according to this embodiment has higher crystallinity, and its hydrothermal durability is more likely to be improved even though the value of the $SiO_2/Al_2O_3$ molar ratio is as low as 35 or less. The half-width of the XRD main peak is preferably 0.475° or less, 0.460° or less, 0.450° or less or 0.420° or less because in that case further improvement in hydrothermal durability can be expected. The lower limit to the half-width of the XRD main peak is not particularly limited, but by way of example, the half-width may be more than 0°, 0.150° or more or 0.200° or more. These upper limits and lower limits to the half-width can be in any combination. Preferably, however, the half-width of the XRD main peak is more than 0° and 0.475° or less because in that case further improvement in hydrothermal durability can be expected. More preferably, the half-width is 0.150° or more and 0.460° or less, even more preferably 0.200° or more and 0.450° or less, particularly preferably 0.200° or more and 0.420° or less. It should be noted that in this embodiment, half-width refers to a full width at half maximum.

Although not particularly limited, the beta zeolite according to this embodiment preferably has at least the XRD peaks listed in Table 1 below. It should be noted that in this embodiment, when a beta zeolite has an XRD peak listed in a table, it means that a peak having its peak top within the lattice spacing d (Å) range specified in the table and having a relative peak intensity as specified in the table can be observed in the XRD pattern.

[Table 1]

| Lattice spacing d (Å) | Relative intensity (%) |
| --- | --- |
| 4.13 ± 0.10 | 5 to 40 |
| 3.95 ± 0.10 | 100 |
| 3.50 ± 0.10 | 5 to 30 |
| 3.29 ± 0.10 | 5 to 30 |
| 2.99 ± 0.05 | 5 to 30 |
| * The relative intensity is a relative value with respect to the intensity of the peak at d = 3.95 ± 0.10 Å | |

Although not particularly limited, the beta zeolite according to this embodiment more preferably has at least the XRD peaks listed in Table 2 below.

[Table 2]

| Lattice spacing d (Å) | Relative intensity (%) |
| --- | --- |
| 6.58 ± 0.10 | 5 to 30 |
| 4.13 ± 0.10 | 5 to 40 |
| 3.95 ± 0.10 | 100 |
| 3.50 ± 0.10 | 5 to 30 |
| 3.29 ± 0.10 | 5 to 30 |
| 3.10 ± 0.05 | 5 to 25 |

(continued)

| Lattice spacing d (Å) | Relative intensity (%) |
|---|---|
| $2.99 \pm 0.05$ | 5 to 30 |
| * The relative intensity is a relative value with respect to the intensity of the peak at d = $3.95 \pm 0.10$ | |

In addition to the XRD peaks in Table 1 above and the XRD peaks in Table 2 above, the beta zeolite according to this embodiment may include other XRD peaks assignable to the beta zeolite. The beta zeolite according to this embodiment, furthermore, may include XRD peaks with a relative intensity of less than 1% in addition to the XRD peaks in Table 2 above and the XRD peaks in Table 3 above. Such low-intensity XRD peaks with a relative intensity of less than 1%, however, do not need to be considered in identifying the crystal structure.

When the beta zeolite according to this embodiment has the XRD peaks in Table 1 above and the XRD peaks in Table 2 above, its crystallinity is higher, and its hydrothermal durability is likely to be even higher. The XRD peaks in Table 2 above and the XRD peaks in Table 3 above are frequently observed when the beta zeolite according to this embodiment is a crystalline aluminosilicate.

Although not particularly limited, the beta zeolite according to this embodiment preferably has a total amount of acid sites of 0.75 mmol/g or more, 0.80 mmol/g or more, 0.85 mmol/g or more or 0.90 mmol/g or more. With a total amount of acid sites of 0.75 mmol/g or more, the beta zeolite according to this embodiment has an increased number of active sites as a catalyst and is likely to achieve further improved catalytic activity. For the beta zeolite according to this embodiment, the upper limit to the total amount of acid sites is preferably 1.70 mmol/g or less, 1.60 mmol/g or less or 1.50 mmol/g or less because in that case further improvement in hydrothermal durability can be expected. These upper limits and lower limits to the total amount of acid sites can be in any combination. Preferably, however, the total amount of acid sites in the beta zeolite according to this embodiment is 0.75 mmol/g or more and 1.70 mmol/g or less, more preferably 0.80 mmol/g or more and 1.70 mmol/g or less, even more preferably 0.85 mmol/g or more and 1.70 mmol/g or less, particularly preferably 0.90 mmol/g or more and 1.70 mmol/g or less, the most preferably 0.90 mmol/g or more and 1.60 mmol/g or less.

The total amount of acid sites is the amount of acid sites present in a unit mass of the zeolite. For measurement of the total amount of acid sites, it can be determined by $NH_3$-TPD using a commonly used temperature-programmed desorption analyzer (e.g., analyzer name: BELCAT II, manufactured by MicrotracBEL Corporation). The sample for measurement used in $NH_3$-TPD can be the zeolite (0.05 g) pretreated at 500°C for 1 hour in an atmosphere through which helium gas flows at 50 ml/minute.

<$NH_3$-TPD Measurement>

The measurement of the total amount of acid sites using $NH_3$-TPD can be performed under the following conditions. For the pretreated beta zeolite (sample for measurement), a mixed gas containing 1% by volume ammonia and 99% by volume helium gas is passed through the sample for measurement at 100°C to allow ammonia to be adsorbed onto the sample for measurement until saturation. After the mixed gas is passed for 30 minutes, the mixed gas is switched to helium gas. By passing helium gas for 15 minutes still at 100°C, removal of residual ammonia in the atmosphere is carried out. After removal of residual ammonia, the temperature is elevated from 100°C to 710°C at a temperature elevation rate of 10°C/minute under a stream of helium at a flow rate of 30 mL/minute. Through this, ammonia adsorbed on the beta zeolite (sample for measurement) is desorbed from the beta zeolite (sample for measurement). The ammonia desorbed from the beta zeolite (sample for measurement) is continuously quantified using a gas chromatograph equipped with a thermal conductivity detector (TCD), through which a desorption spectrum for ammonia (hereinafter also referred to as "TPD spectrum") can be obtained.

The TPD spectrum obtained can be analyzed by isolating a spectrum indicating ammonia desorbed from the beta zeolite (sample for measurement) (hereinafter also referred to as "ammonia desorption spectrum") using commonly used analysis software (e.g., software name: Chem Master, Microtrac for Windows ver 1.4.9, manufactured by MicrotracBEL Corporation). Specifically, the ammonia desorption segment of the TPD spectrum is subjected to baseline processing by defining 100°C in the temperature elevation process from 100°C to 710°C as the baseline start and 700°C in the temperature elevation process from 100°C to 710°C as the baseline end. In the TPD spectrum after baseline processing, the spectrum over the ammonia desorption segment (i.e., the range from 100°C to 700°C, both inclusive, in the temperature elevation process) is defined as the ammonia desorption spectrum. The area (integral) of this ammonia desorption spectrum is determined, and it is deemed the amount of ammonia desorbed from the beta zeolite (sample for measurement) (hereinafter also referred to as "the amount of ammonia desorbed"). The total amount of acid sites in the beta zeolite can be determined by dividing the determined amount of ammonia desorbed (mmol) by the mass (g) of the beta zeolite used for measurement. It should be noted that the mass (g) of the beta zeolite used for measurement can be the mass of the pretreated beta zeolite (i.e., the sample for measurement).

For the beta zeolite according to this embodiment, it is preferred that its cation type be protonic because in that case further improvement in catalytic activity can be expected. In this context, when the cation type is protonic, it means that the counterions are protons ($H^+$). However, this does not only mean that all counterions are protons, but also permits the presence of trace amounts of alkali metal ions as counterions in addition to protons. In this embodiment, trace amounts of alkali metal ions refer to alkali metal ions present in amounts such that the alkali metal content is 0.5% by mass or less. That is, beta zeolites according to this embodiment whose cation type is protonic encompass beta zeolites in which all counterions are protons, and zeolites in which protons ($H^+$) and alkali metal ions in amounts such that the alkali metal content is 0.5% by mass or less are contained as counterions. In this embodiment, as an example, the cation type of a zeolite can be considered protonic when the total alkali metal content of the zeolite is 0.5% by mass or less and when the pH of a zeolite slurry obtained by dispersing 2 g of the zeolite in 18 g of purified water at 25°C (i.e., obtained by adjusting the solids concentration to 10% by mass) (Hereinafter also referred to as "slurry pH".) is below 7 at the same time.

The beta zeolite according to this embodiment may contain fluorine (F) and phosphorus (P) to an extent that the advantageous effects of the invention are not affected. Preferably, however, the beta zeolite is substantially free of fluorine (F) and phosphorus (P) because in that case the zeolite is more adaptable to industrial production. More preferably, the beta zeolite is free of fluorine (F) and phosphorus (P). It should be noted that in this embodiment, being substantially free of a predetermined component means that the amount of the predetermined component is below the limit of measurement (e.g., the fluorine content is less than 0.01% by mass or less, the phosphorus content is less than 0.01% by mass, or the total amount of fluorine and phosphorus is less than 0.01% by mass).

The beta zeolite according to this embodiment is not limited in terms of its purpose of use and can be used in applications of beta zeolites known in the related art. For example, it can be used in at least one of a catalyst application or an adsorbent application. It should be noted that the adsorbent can function as a hydrocarbon adsorbent, an ion-exchange agent or an agent for separating a particular component from a mixed gas. The beta zeolite according to this embodiment can be used as a solid acid catalyst having high hydrothermal durability. The solid acid catalyst can specifically be, for example, one or more selected from the group of an exhaust gas purification catalyst, a toluene disproportionation catalyst, which is for catalyzing disproportionation of toluene, a xylene isomerization catalyst, which is for catalyzing isomerization of xylene, an MTO catalyst, which is for catalyzing MTO (Methanol to Olefins) reactions, and an MTA catalyst, which is for catalyzing MTA (Methanol to Aromatics) reactions. Preferably, the catalyst is an exhaust gas purification catalyst. The beta zeolite according to this embodiment, furthermore, can be used as a catalyst for treating exhaust gas from an internal combustion engine, or even as a catalyst for treating automotive exhaust gas. Examples of exhaust gases include nitrogen oxides-containing gases, and the exhaust gas purification catalyst is preferably a nitrogen oxides-reducing catalyst.

When the beta zeolite according to this embodiment is used as an adsorbent or solid acid catalyst as described above, the beta zeolite according to this embodiment may be used as an adsorbent or solid acid catalyst as is. However, a predetermined component may be incorporated into the beta zeolite according to this embodiment before use as an adsorbent or solid acid catalyst. That is, the beta zeolite according to this embodiment may be used as an adsorbent or solid acid catalyst as is or may be used as a support for containing a predetermined component of the adsorbent or solid acid catalyst.

A solid acid catalyst made using the beta zeolite according to this embodiment only needs to include the beta zeolite according to this embodiment. That is, a solid acid catalyst made using the beta zeolite according to this embodiment may be composed solely of the beta zeolite according to this embodiment or may further include other components, such as a binder and zeolites other than the beta zeolite according to this embodiment, in addition to the beta zeolite according to this embodiment.

In a solid acid catalyst made using the beta zeolite according to this embodiment, the beta zeolite according to this embodiment is preferably used as a support for containing one or more elements selected from the group of group 8, group 9, group 10 and group 11 in the periodic table (hereinafter also referred to as "active metal elements") because in that case the achievement of higher catalytic activity is facilitated. That is, a solid acid catalyst made using the beta zeolite according to this embodiment preferably includes a beta zeolite according to this embodiment containing at least one active metal element (hereinafter also referred to simply as "active metal-containing beta zeolite according to this embodiment") because in that case the achievement of higher catalytic activity is facilitated.

In the active metal-containing beta zeolite according to this embodiment, the active metal element is preferably one or more selected from the group of platinum (Pt), palladium (Pd), rhodium (Rh), iron (Fe), copper (Cu), cobalt (Co), manganese (Mn) and indium (In) because in that case the achievement of higher catalytic activity is facilitated. More preferably, the active metal element is at least one of iron or copper, even more preferably iron.

In the active metal-containing beta zeolite according to this embodiment, the state of the active metal element is not particularly limited, but by way of example, the active metal element may be in the state of a compound (e.g., an oxide), a metal, ions, an alloy or two or more thereof.

In the active metal-containing beta zeolite according to this embodiment, the amount of the active metal element is not particularly limited, as long as it falls within a range in which the advantageous effects of this embodiment are delivered. Preferably, the amount of the active metal element is 0.05% by mass or more so that higher catalytic activity is attained. More preferably, the amount is 0.20% by mass or more, even more preferably 0.30% by mass or more. The upper limit to the amount of the active metal element, furthermore, is preferably 10.0% by mass or less so that higher catalytic activity is attained. More preferably, the upper limit is 7.0% by mass or less, even more preferably 5.0% by mass or less. The upper limit and lower limit to the amount of the active metal element may be any combination of these upper limits and lower limits. As a specific range, however, the amount of the active metal element is preferably 0.05% by mass or more and 10.0% by mass or less so that higher catalytic activity is attained. More preferably, the amount is 0.20% by mass or more and 7.0% by mass or less, particularly preferably 0.30% by mass or more and 5.0% by mass or less.

The amount of the active metal element is the percentage of the amount of the active metal element (A) relative to the total amount of the amount of silicon (Si) measured as $SiO_2$, the amount of aluminum (Al) measured as $Al_2O_3$ and the amount of the active metal element (A) in the active metal-containing beta zeolite according to this embodiment and can be determined according to equation (3) below.

$$\text{Amount of the active metal element [\% by mass]} = \{A/(SiO_2 + Al_2O_3 + A)\} \times 100 \qquad (3)$$

In equation (3) above, $SiO_2$ denotes the amount [g] of silicon (Si) measured as $SiO_2$, $Al_2O_3$ denotes the amount [g] of aluminum (Al) measured as $Al_2O_3$, and A denotes the amount [g] of the active metal element (A).

It should be noted that when two or more active metal elements (A) are contained in the active metal-containing beta zeolite according to this embodiment, A in equation (3) above can be the total of the amounts of the two or more active metal elements (A).

It should be noted that "containing an active metal element" refers to the inclusion of an active metal element in the beta zeolite. As long as an active metal element is included in the beta zeolite, the active metal element may be included in any state at any site. "Supporting an active metal element," by contrast, refers to the inclusion of an active metal element in the beta zeolite except as T atoms. That is, "supporting an active metal element" means that an active metal element is included in the beta zeolite in a state in which the active metal element is not present as T atoms in the beta zeolite. An example of a preferred form of "supporting an active metal element" is a state in which the active metal element is not present as T atoms in the beta zeolite and is included at least one of on the surface or in the pores in the zeolite beta. The active metal-containing beta zeolite according to this embodiment is preferably a beta zeolite according to this embodiment supporting at least one active metal element (hereinafter also referred to as "active metal-supporting beta zeolite").

When a solid acid catalyst including an active metal-containing beta zeolite according to this embodiment is used as a nitrogen oxides-reducing catalyst, a fluid containing at least a reducing agent, oxygen and nitrogen oxides (hereinafter also referred to as "NOx-containing fluid") can be passed through the solid acid catalyst (nitrogen oxides-reducing catalyst) such that the NOx-containing catalyst and the active metal-containing beta zeolite come into contact. As a result of the contact between the NOx-containing fluid and the active metal-containing beta zeolite, the nitrogen oxides are reduced and decomposed. It should be noted that the conditions for contact between the NOx-containing fluid and the active metal-containing beta zeolite can be conditions known in the related art for contact using a nitrogen oxides-reducing catalyst and are not particularly limited. Examples of reducing agents that can be contained in the NOx-containing fluid, furthermore, include ammonia ($NH_3$). In addition to the reducing agent, oxygen, and nitrogen oxides, the NOx-containing fluid may contain other components, such as water.

The beta zeolite according to this embodiment as described above can combine catalytic activity with hydrothermal durability, between which there has been a trade-off in known methods (the methods of PTL 1 and NPL 1), and can exhibit excellent catalytic activity and excellent hydrothermal durability. The beta zeolite according to this embodiment, therefore, can continue maintaining excellent catalytic activity even when exposed to a high-temperature atmosphere containing steam. It should be noted that in this embodiment, hydrothermal durability is evaluated based on catalytic activity at 200°C after hydrothermal aging treatment. The higher the catalytic activity at 200°C after hydrothermal aging treatment, the higher the hydrothermal durability. The hydrothermal aging treatment, furthermore, can be a treatment in which the zeolite is exposed to an atmosphere containing 10% by volume steam at 700°C for 20 hours. In this embodiment, the percentage by volume of water in the hydrothermal aging treatment atmosphere is deemed the steam concentration of the hydrothermal aging treatment atmosphere, assuming ideal gas behavior.

<Method for Manufacturing the Beta Zeolite>

A method for manufacturing the beta zeolite according to this embodiment will now be described. A method for manufacturing the beta zeolite according to this embodiment comprises a step of crystallizing a composition (Hereinafter also referred to as "source composition.") containing at least one silica source, at least one alumina source, at least one potassium source, at least one organic structure-directing agent source (Hereinafter also referred to as "SDA source.") and water and having a $SiO_2/Al_2O_3$ molar ratio of 20 or greater and 60 or less and a fluorine-to-silica molar ratio (hereinafter also referred to as "$F/SiO_2$ molar ratio") of 0.01 or less to obtain a crystallized material (hereinafter also referred to as "crystallization step"), a step of bringing the crystallized material and an ammonium-containing solution into contact to obtain an acid-treated material (Hereinafter also referred to as "metal cation removal step.") and a step of firing the acid-treated material at 400°C or above and 800°C or below in at least one atmosphere in which steam constitutes less than 5% by volume (Hereinafter also referred to as "SDA removal step.").

(Crystallization Step)

The method for manufacturing the beta zeolite according to this embodiment comprises a step of crystallizing a source composition containing at least one SDA source, at least one alumina source, at least one silica source, at least one potassium source and water and having a $SiO_2/Al_2O_3$ molar ratio of 20 or greater and 60 or less and a $F/SiO_2$ molar ratio of 0.01 or less to obtain a crystallized material (crystallization step).

The $SiO_2/Al_2O_3$ ratio of the source composition is 20 or greater and 60 or less. When the $SiO_2/Al_2O_3$ ratio of the source composition exceeds 60, the $SiO_2/Al_2O_3$ ratio of the resulting beta zeolite exceeds 35, or, even if a beta zeolite having a $SiO_2/Al_2O_3$ ratio of 20 or greater and 35 or less is obtained, its catalytic activity is likely to be reduced due to low crystallinity. When the $SiO_2/Al_2O_3$ ratio of the source composition is less than 20, however, the $SiO_2/Al_2O_3$ ratio of the resulting beta zeolite falls below 20. Although the $SiO_2/Al_2O_3$ ratio of the source composition only needs to be 20 or greater and 60 or less, it is preferred that the $SiO_2/Al_2O_3$ ratio be 20 or greater and 50 or less because in that case further improvement in the catalytic activity and hydrothermal durability of the resulting beta zeolite can be expected. More preferably, the $SiO_2/Al_2O_3$ ratio is 20 or greater and 40 or less.

The $F/SiO_2$ molar ratio of the source composition is 0.01 or less. When the $F/SiO_2$ molar ratio of the source composition exceeds 0.01, the particle size of the resulting beta zeolite becomes large. It is, therefore, difficult to remove alkali metals in the metal cation removal step, and the total alkali metal content of the resulting beta zeolite exceeds 0.5% by mass. Although the $F/SiO_2$ molar ratio only needs to be 0.01 or less, it is preferred that the source composition be substantially free of fluorine because in that case further improvement in the hydrothermal durability of the resulting beta zeolite can be expected. More preferably, the source composition is free of fluorine. It should be noted that when the source composition is free of fluorine, it means that the $F/SiO_2$ molar ratio is 0.

The source composition contains at least one SDA source. An SDA source is a substance capable of producing, within the source composition, an SDA that directs formation of beta zeolite, and the SDA source can be, for example, at least one of an SDA or an SDA salt. The SDA(s) that directs formation of beta zeolite can be, for example, one or more organic cations selected from the group of the tetramethylammonium cation (hereinafter also referred to as "TEA$^+$"), the methylpropylpyrrolidinium cation (MPC$_5{}^+$), the butylmethylpyrrolidinium cation (BMC$_5{}^+$) and the methylpropylpiperidi-nium cation (MPC$_6{}^+$), with TEA$^+$ being preferred because in that case the manufacture of the beta zeolite according to this embodiment is facilitated. The SDA salt(s) can be, for example, one or more selected from the group of the hydroxide, a halide, the carbonic acid monoester salt and the sulfuric acid monoester salt of the SDA. Preferably, the SDA salt(s) is one or more selected from the group of the hydroxide, the chloride, the bromide and the iodide of the SDA because in that case the manufacture of the beta zeolite according to this embodiment is facilitated. One or more selected from the group of the hydroxide, the bromide and the iodide of the SDA are more preferred, at least one of the hydroxide or bromide of the SDA is even more preferred, and the hydroxide of the SDA is particularly preferred.

The source composition contains at least one alumina source. The alumina source is at least one of alumina ($Al_2O_3$) or a precursor thereof. For example, the alumina source can be one or more selected from the group of alumina, aluminum sulfate, aluminum nitrate, sodium aluminate, aluminum chloride, aluminum hydroxide, an amorphous aluminosilicate, metallic aluminum, a crystalline aluminosilicate and an aluminum alkoxide. One or more selected from the group of aluminum hydroxide, a crystalline aluminosilicate and an amorphous aluminosilicate are preferred, and an amorphous aluminosilicate is more preferred. It should be noted that when another starting material contained in the source composition aside from the alumina source contains aluminum, this material can be deemed an alumina source. For example, when a silica source is a substance containing aluminum, such as a crystalline aluminosilicate or amorphous aluminosilicate, this silica source can be deemed to be an alumina source while being a silica source.

The source composition contains at least one silica source. The silica source is at least one of silica ($SiO_2$) or a precursor thereof. For example, the silica source can be one or more selected from the group of colloidal silica, amorphous silica, sodium silicate, tetraethoxysilane, tetraethyl orthosilicate, precipitated silica, fumed silica, an amorphous aluminosilicate and a crystalline aluminosilicate. At least one of a crystalline aluminosilicate or an amorphous aluminosilicate is preferred, and an amorphous aluminosilicate is more preferred.

For the source composition, it is preferred that at least one of the alumina source or the silica source include an amorphous aluminosilicate, and it is preferred that the alumina source and the silica source include an amorphous aluminosilicate. This tends to result in lower manufacturing costs and thus is industrially advantageous.

The source composition contains at least one potassium source. The potassium source can be, for example, at least one salt or compound containing potassium. The salt or compound containing potassium can be, for example, one or more selected from the group of potassium chloride, potassium fluoride, potassium iodide, potassium bromide, potassium sulfate, potassium hydroxide and potassium oxide. One or more selected from the group of potassium chloride, potassium bromide and potassium hydroxide are preferred because in that case the manufacture of the beta zeolite according to this embodiment is facilitated, with potassium hydroxide being more preferred. When another starting material contained in the source composition aside from the alkali source contains potassium, furthermore, potassium contained in this starting material can also be deemed an alkali source.

The source composition contains water. Examples of types of water that can be contained in the source composition include deionized water and purified water. In addition, it is water as water of constitution or a solvent, for example, and may be water ($H_2O$) contained in another starting substance.

The source composition may be composed solely of the SDA source, the alumina source, the silica source, the potassium source and water or may further contain, in addition to these, other substances aside from these (hereinafter also referred to as "additional substances"). The source composition is preferably substantially free of alkali sources other than the potassium source because in that case the reduction of the silanol intensity ratio of the manufactured beta zeolite is further facilitated. More preferably, the source composition is free of alkali sources other than the potassium source, and even more preferably, it is composed solely of the SDA source, the alumina source, the silica source, the potassium source and water.

Examples of additional substances that can be contained in the source composition include alkali sources other than the potassium source. Examples of alkali sources other than potassium include salts or compounds containing at least one alkali metal other than potassium. The alkali metal other than potassium can be, for example, one or more selected from the group of lithium, sodium, rubidium and cesium. Preferably, the alkali metal is sodium.

Although the source composition may contain alkali sources other than the potassium source as additional substances, it is preferred that the molar ratio of potassium to all alkali metals (M) contained in the source composition (hereinafter also referred to as "K/M molar ratio") be 0.40 or greater, 0.50 or greater,, 0.70 or greater or 0.90 or greater because in that case the reduction of the silanol intensity ratio of the manufactured beta zeolite is further facilitated. The upper limit to the K/M molar ratio can be any value, but by way of example, the K/M molar ratio may be 1.00 or less. The upper limit and lower limits to the K/M molar ratio can be in any combination. Preferably, however, the K/M molar ratio of the source composition is 0.40 or greater and 1.00 or less because in that case the reduction of the silanol intensity ratio of the manufactured beta zeolite is further facilitated. More preferably, the K/M molar ratio is 0.50 or greater and 1.00 or less, even more preferably 0.70 or greater and 1.00 or less, particularly preferably 0.90 or greater and 1.00 or less. It should be noted that when the K/M molar ratio is 1.00, it means that potassium is the only alkali metal contained in the source composition.

Examples of preferred chemical formulations of the source composition include the following molar formulations. In the following molar formulations, the $SDA^+/SiO_2$ molar ratio denotes the molar ratio of the SDA to silica. For example, the $SDA^+/SiO_2$ molar ratio in a case when $SDA^+$ is $TEA^+$ can be deemed the $TEA^+/SiO_2$ molar ratio. In the following molar formulations, furthermore, the $K/SiO_2$ molar ratio denotes the molar ratio of potassium to silica. Moreover, in the following molar formulations, the $H_2O/SiO_2$ molar ratio denotes the molar ratio of water to silica, and the $OH/SiO_2$ molar ratio denotes the molar ratio of hydroxide ions to silica. In addition, each composition ratio in the following molar formulations can be any value obtained by combining any upper limit and lower limit specified below.

$SiO_2/Al_2O_3$ molar ratio: 20 or greater and 60 or less, 20 or greater and 50 or less or 20 or greater and 40 or less.

$SDA^+/SiO_2$ molar ratio: 0.01 or greater and 1.00 or less, 0.01 or greater and 0.50 or less, 0.01 or greater and 0.20 or less, 0.01 or greater and 0.15 or less, 0.02 or greater and 1.00 or less, 0.02 or greater and 0.50 or less, 0.02 or greater and 0.20 or less, 0.02 or greater and 0.15 or less, 0.05 or greater and 1.00 or less, 0.05 or greater and 0.50 or less, 0.05 or greater and 0.20 or less, 0.05 or greater and 0.15 or less, 0.07 or greater and 1.00 or less, 0.07 or greater and 0.50 or less, 0.07 or greater and 0.20 or less or 0.07 or greater and 0.15 or less.

$K/SiO_2$ molar ratio: greater than 0 and 0.60 or less, greater than 0 and 0.50 or less, greater than 0 and 0.30 or less, 0.03 or greater and 0.60 or less, 0.03 or greater and 0.50 or less, 0.03 or greater and 0.30 or less, 0.06 or greater and 0.60 or less, 0.06 or greater and 0.50 or less or 0.06 or greater and 0.30 or less.

$H_2O/SiO_2$ molar ratio: 3 or greater and 50 or less, 3 or greater and 30 or less, 3 or greater and 20 or less, 3 or greater and 19 or less, 5 or greater and 50 or less, 5 or greater and 30 or less, 5 or greater and 20 or less, 5 or greater and 19 or less, 8 or greater and 50 or less, 8 or greater and 30 or less, 8 or greater and 20 or less or 8 or greater and 19 or less.

$OH/SiO_2$ molar ratio: 0.05 or greater and 1.50 or less, 0.05 or greater and 1.00 or less, 0.05 or greater and 0.80 or less, 0.05 or greater and 0.60 or less, 0.05 or greater and 0.45 or less, 0.10 or greater and 1.50 or less, 0.10 or greater and 1.00 or less, 0.10 or greater and 0.80 or less, 0.10 or greater and 0.60 or less, 0.10 or greater and 0.45 or less, 0.15 or greater and 1.50 or less, 0.15 or greater and 1.00 or less, 0.15 or greater and 0.80 or less, 0.15 or greater and 0.60 or less or 0.15 or greater and 0.45 or less.

$F/SiO_2$ molar ratio: 0 or greater and 0.01 or less, greater than 0 and 0.01 or less or 0 or greater and 0.005 or less.

In the crystallization step, the source composition is crystallized. The crystallization of the source composition may be performed in the presence of at least one seed crystal so that the crystallization of the beta zeolite is accelerated. The seed crystal can be, for example, one or more selected from the group of a beta zeolite, an MFI zeolite and an FER zeolite, or can even be a beta zeolite. The percentage of the total mass of silicon (Si) and aluminum (Al) measured as $SiO_2$

and $Al_2O_3$, respectively, in the seed crystal relative to the total mass of silicon (Si) and aluminum (Al) measured as $SiO_2$ and $Al_2O_3$, respectively, in the source composition (excluding the seed crystal) (Hereinafter also referred to as "seed crystal content.") can be, for example, 0% or more and 10% or less by mass, 0% or more and 5% or less by mass or 0% or more and 3% or less by mass. An example of a method for crystallizing the source composition in the presence of a seed crystal is the method of crystallizing a mixture obtained by mixing the source composition and the seed crystal. The crystallization of the source composition may be performed without mixing a seed crystal into the source composition, or, in other words, with the seed crystal content being 0% by mass.

In the crystallization step, the crystallization of the source composition can be performed by subjecting the source composition to hydrothermal treatment. The hydrothermal treatment can be carried out by placing the source composition and the seed crystal in a hermetically sealed pressure vessel and heating the mixture. The conditions for hydrothermal treatment are preferably the following conditions.

Treatment temperature: 130°C or above and 200°C or below, 140°C or above and 180°C or below or 150°C or above and 170°C or below

Treatment duration: 1 hour or more, 10 hours or more, 1 hours or more, 10 hours or more or 24 hours or more and 7 days or less, 5 days or less, 3 days or less or 2 days or less

Treatment state: In a closed system and in at least one of a stirred state or stationary state or in a stirred state

Treatment pressure: Autogenous pressure

For example, when a beta zeolite having a $SiO_2/Al_2O_3$ molar ratio of 20 or greater and 35 or less is crystallized, the beta zeolite can be crystallized within a crystallization duration of 2 days when the crystallization temperature is 130°C or above and 200°C or below.

The crystallized material obtained through the crystallization step may be washed. The washing of the crystallized material can be carried out by washing the crystallized material collected after crystallization by any method. The method for washing the crystallized material is not particularly limited, but an example is the method of washing the crystallized material obtained as a solid phase after the crystallization step with purified water in an amount one or more times, by mass, the total of the amount of the source composition excluding the seed crystal used for crystallization. For example, when the total amount of the source composition is 60 g, washing can be performed with 60 g or more of purified water, regardless of whether the seed crystal was added. The washed crystallized material may optionally be dried. Drying can be carried out by any method by which water physically adsorbed on the crystallized material can be removed, and an example is to treat the crystallized material at 100°C or above and below 300°C for 4 hours or more in at least one of an oxidizing atmosphere or an inert atmosphere. It should be noted that a specific example of an atmosphere in which the crystallized material is dried is air atmosphere.

The crystallized material obtained through the crystallization step may be subjected to at least one of washing or drying treatment before the metal cation removal step, but must not be subjected to firing treatment. Firing the crystallized material before the metal cation removal step results in an increased silanol intensity ratio, which prevents the manufacture of the beta zeolite according to this embodiment. It should be noted that in this embodiment, firing treatment refers to heat treatment at 300°C or above.

(Metal Cation Removal Step)

The method for manufacturing the beta zeolite according to this embodiment comprises a step of bringing the crystallized material obtained through the crystallization step described above and an ammonium-containing solution into contact to obtain an acid-treated material (metal cation removal step). Through this, an acid-treated material in which alkali metal elements contained in the crystallized material have been removed is obtained.

The ammonium-containing solution used in the metal cation removal step is a solution containing ammonium ($NH_4^+$) and contains, at least, at least one ammonium source and at least one solvent. The solvent contained in the ammonium-containing solution can be any medium capable of containing ammonium ($NH_4^+$). For example, the solvent can be at least one of an alcohol or water, and preferably is water. An ammonium-containing solution in which the solvent is water is also referred to as an ammonium-containing aqueous solution.

The ammonium source contained in the ammonium-containing solution can be, for example, ammonia or at least one ammonium salt. The ammonium salt can be any salt(s) containing ammonium ($NH_4^+$). For example, the ammonium salt can be inorganic salt(s) of ammonium, can be one or more selected from the group of ammonium carbonate, ammonium chloride and ammonium nitrate or can be ammonium chloride.

The ammonium concentration ($NH_4^+$ concentration) of the ammonium-containing solution is not particularly limited, as long as the total alkali metal content of the manufactured beta zeolite is 0.5% by mass or less. For example, however, the ammonium concentration can be 1% by mass or more and 30% by mass or less, and preferably is 5% by mass or more and 20% by mass or less. It should be noted that the ammonium concentration ($NH_4^+$ concentration) of the

ammonium-containing solution is a concentration determined by calculation from the amount of ammonium ($NH_4^+$) present in the ammonium source contained in the ammonium-containing solution.

The amount of the ammonium-containing solution brought into contact with the crystallized material is not particularly limited, as long as the total alkali metal content of the manufactured beta zeolite is 0.5% by mass or less. For sufficient removal of alkali metals from the crystallized material, however, it is preferred that the ratio of the mass of the ammonium-containing solution to the dry mass of the crystallized material (Hereinafter also referred to as "$NH_4$/beta mass ratio.") be 10 or less, 8 or less or 6 or less. Preferably, the $NH_4$/beta mass ratio exceeds 1, is 1.5 or greater or 2 or greater. These upper limits and lower limits to the $NH_4$/beta mass ratio can be in any combination. Preferably, however, the $NH_4$/beta mass ratio is greater than 1 and 10 or less to ensure sufficient removal of alkali metals from the crystallized material, and more preferably is 1.5 or greater and 8 or less, even more preferably 2 or greater and 6 or less. It should be noted that in this embodiment, "the dry mass of the crystallized material" is the mass of the crystallized material after drying at 110°C for 4 hours in air atmosphere.

The temperature of the ammonium-containing solution brought into contact with the crystallized material is not particularly limited. For example, the temperature can be 5°C or above and 100°C or below, 10°C or above and 90°C or below or 20°C or above and 80°C or below.

The method for bringing the crystallized material and the ammonium-containing solution into contact is not particularly limited. Examples include the method of passing the ammonium-containing solution through the crystallized material shaped into a predetermined shape (flow method) and the method of filling the inside of a reaction vessel containing the crystallized material with the ammonium-containing solution (batch method).

The duration of contact between the crystallized material and the ammonium-containing solution is not particularly limited and can be set as appropriate such that the total alkali metal content of the manufactured beta zeolite is 0.5% by mass or less.

The acid-treated material obtained through the metal cation removal step may be subjected to at least one of washing or drying treatment. The conditions for washing and drying of the acid-treated material are not described; they are similar to the conditions for washing and drying that can be performed in the crystallization step described above.

The acid-treated material obtained through the metal cation removal step preferably has a total alkali metal content of 0.5% by mass or less. Subjecting an acid-treated material having such a total alkali metal content to the SDA removal step described below facilitates the manufacture of a beta zeolite having a total alkali metal content of 0.5% by mass or less and a further reduced silanol intensity ratio. Although the reason for this is unclear, the inventors believe that by virtue of the total alkali metal content in the acid-treated material being 0.5% by mass or less, silanol defects that form within the beta zeolite are more likely to condense with combustion heat without being inhibited by alkali metal cations.

(SDA Removal Step)

The method for manufacturing the beta zeolite according to this embodiment comprises a step of firing the acid-treated material obtained through the metal cation removal step described above at 400°C or above and 800°C or below in at least one atmosphere in which steam constitutes less than 5% by volume (SDA removal step). Through this, the SDA contained in the acid-treated material is removed, and the beta zeolite according to this embodiment is obtained. It should be noted that in the SDA removal step, it is not necessary to remove all of the SDA contained in the acid-treated material. As long as the SDA content of the resulting beta zeolite is 4.0% by mass or less, removal of at least part of the SDA contained in the acid-treated material is sufficient.

In the SDA removal step, the atmosphere in which the acid-treated material is fired (hereinafter also referred to as "firing atmosphere") contains less than 5% by volume steam. By virtue of the steam concentration of the firing atmosphere being less than 5% by volume, the SDA can be removed without significant impact on aluminum in the framework structure, which serves as catalytically active sites. When the steam concentration of the firing atmosphere is 5% by volume or more, by contrast, aluminum in the framework structure, serving as catalytically active sites, becomes desorbed, resulting in reduced catalytic activity of the resulting beta zeolite, as with steaming described in NPL 1. Although the steam concentration of the firing atmosphere only needs to be less than 5% by volume, it is preferred that the steam concentration be 3% by volume or less because in that case aluminum in the framework structure is less likely to become desorbed. More preferably, the steam concentration is 2% by volume or less, even more preferably less than 1% by volume. The lower limit to the steam concentration is not particularly limited, but by way of example, the steam concentration may be 0% by volume or more. It should be noted that in this embodiment, the percentage by volume of water in the firing atmosphere is deemed the steam concentration of the firing atmosphere, assuming ideal gas behavior. In this embodiment, furthermore, steaming refers to a treatment in which a zeolite is fired in an atmosphere in which steam constitutes 5% by volume or more.

The firing atmosphere can be any atmosphere(s) in which the SDA can be removed from the acid-treated material, and only needs to be at least one of an oxidizing atmosphere, an inert atmosphere or a reducing atmosphere. Preferably, the firing atmosphere is an oxidizing atmosphere, more preferably air atmosphere.

In the SDA removal step, the firing of the acid-treated material can be performed at 400°C or above and 800°C or below. Preferably, however, the temperature is 550°C or above and 750°C or below because in that case further improvement in the hydrothermal durability of the resulting beta zeolite can be expected.

In the SDA removal step, the firing of the acid-treated material can be performed at 400°C or above and 800°C or below in at least one atmosphere in which steam constitutes less than 5% by volume. Preferably, however, the firing is performed at 400°C or above and 800°C or below in one or more atmospheres that are selected from the group of an oxidizing atmosphere, an inert atmosphere and a reducing atmosphere and in which steam constitutes less than 5% by volume because in that case further improvement in the hydrothermal durability of the resulting beta zeolite can be expected. More preferably, the firing is performed at 550°C or above and 750°C or below in an air atmosphere in which steam constitutes less than 5% by volume.

In the SDA removal step, the duration of firing of the acid-treated material can be changed as appropriate such that the SDA content of the manufactured beta zeolite is 4.0% by mass or less and is not particularly limited. By way of example, however, the duration can be 1 hour or more and 5 hours or less.

With the manufacturing method described above, the beta zeolite according to this embodiment, which has excellent catalytic activity and hydrothermal durability, can be manufactured. Although the reason for this remains unclear, in the above-described manufacturing method, a crystallized material containing an SDA is first subjected to a metal cation removal step, and then an acid-treated material from which alkali metals have been removed is subjected to an SDA removal step. The inventors presume that this allows an ammonium-containing solution for removing alkali metals to come into contact with the crystallized material (beta zeolite) in a state in which aluminum in the crystallized material (beta zeolite) is protected by the SDA, thereby reducing the likelihood of desorption of aluminum from the framework structure caused by contact with the ammonium-containing solution (hereinafter also referred to as "aluminum desorption"). In the above-described manufacturing method, furthermore, firing of the crystallized material is performed in the SDA removal step, which follows the metal cation removal step. The inventors presume that by virtue of this, condensation of silanol defects induced by firing proceeds without being inhibited by alkali metal cations. As a result, the inventors believe, silanol defects can be reduced while excellent catalytic activity is maintained, enabling manufacture of the beta zeolite according to this embodiment, which has excellent catalytic activity and hydrothermal durability.

When the crystallized material (beta zeolite) is subjected to the SDA removal step before being subjected to the metal cation removal step as in PTL 1, by contrast, aluminum desorption is more likely to occur upon contact with the ammonium-containing solution in the metal cation removal step. The inventors presume that this results in reduced catalytic activity of the resulting beta zeolite and formation of new silanol defects. In addition, subjecting the crystallized material (beta zeolite) to the SDA removal step before subjecting it to the metal cation removal step as in PTL 1 presumably causes condensation of silanol defects induced by firing to be inhibited by alkali metal cations. The inventors believe that as a result of this, in a manufacturing method in which the crystallized material (beta zeolite) is subjected to the SDA removal step before being subjected to the metal cation removal step as in PTL 1, reductions in catalytic activity and hydrothermal durability become more pronounced with decreasing $SiO_2/Al_2O_3$ molar ratio (increasing amount of aluminum), preventing manufacture of a low-silica beta zeolite that combines catalytic activity with hydrothermal durability.

(Active Metal Loading Step)

A method for manufacturing a beta zeolite according to this embodiment containing an active metal element (an active metal-containing beta zeolite according to this embodiment) will now be described. When the beta zeolite according to this embodiment contains an active metal element, higher catalytic activity can be expected. An active metal-containing beta zeolite according to this embodiment can be manufactured by a manufacturing method that includes a step of bringing a beta zeolite according to this embodiment and at least one active metal source into contact (Hereinafter also referred to as "active metal loading step.").

In the active metal loading step, a beta zeolite according to this embodiment and at least one active metal source are brought into contact to cause any active metal element to be incorporated into the beta zeolite according to this embodiment. In the active metal loading step, the contact between the beta zeolite and the active metal source can be performed by at least one method such that an active metal element can be incorporated into the beta zeolite. For example, one or more methods selected from the group of ion exchange, incipient wetness impregnation, evaporation to dryness, deposition by precipitation and physical mixing can be used. Preferably, the contact between the beta zeolite and the active metal source is performed using incipient wetness impregnation because it facilitates incorporation of the active metal element into the beta zeolite. An example of incipient wetness impregnation is the method of bringing the beta zeolite according to this embodiment and a solution containing the active metal source (hereinafter also referred to as "active metal solution") into contact.

The active metal solution contains, at least, at least one active metal source and at least one solvent. The active metal source contained in the active metal solution is at least one of a salt or compound containing an active metal element. For example, the active metal source can be one or more selected from the group of a nitrate, sulfate, acetate, chloride, complex salt, oxide and complex oxide containing an active metal element, and preferably is one or more selected from the group of a nitrate, sulfate and chloride containing an active metal element.

The solvent contained in the active metal solution can be any solvent(s) in which at least one of a salt or compound containing an active metal element dissolves. For example, the solvent can be water. At least one of purified water or deionized water, furthermore, is preferred.

The conditions for contact between the beta zeolite according to this embodiment and the active metal solution can be conditions used in incipient wetness impregnation processes known in the related art and are not particularly limited.

By bringing the beta zeolite according to this embodiment and the active metal solution into contact, the active metal element is incorporated into the beta zeolite according to this embodiment, whereby an active metal-containing beta zeolite according to this embodiment can be manufactured. It should be noted that the beta zeolite according to this embodiment brought into contact with the active metal solution may be subjected to at least one of drying treatment or firing treatment before being finished as an active metal-containing beta zeolite according to this embodiment. The drying treatment and the firing treatment can be performed using conditions used in incipient wetness impregnation processes known in the related art; the conditions for these treatments are not particularly limited.

[Examples]

In the following, the present disclosure will be described using examples. The present disclosure, however, is not limited to them.

(Zeolite Structure)

Using a commonly used powder X-ray diffractometer (instrument name: Ultima IV, manufactured by Rigaku Corporation), an XRD pattern of a sample was measured. The measurement conditions are as follows.
Accelerating current and voltage: 40 mA and 40 kV
X-ray source: CuK$\alpha$ radiation ($\lambda$ = 1.5405 Å)
Measurement mode: Continuous scanning
Scan condition: 40°/minute
Measurement range: $2\theta$ = 3° to 43°
Vertical divergence-limiting slit: 10 mm
Divergence/Incident slits: 1°
Receiving slit: Open
Receiving Soller slit: 5°
Detector: Semiconductor detector (D/teX Ultra)
Filter: Ni filter

The XRD pattern obtained was analyzed under the following conditions using commonly used analysis software (SmartLab Studio II, manufactured by Rigaku Corporation). By comparing the XRD pattern and a reference pattern, furthermore, the zeolite structure of the sample was identified. It should be noted that the crystalline XRD peaks were defined as peaks that were detected with identified peak-top $2\theta$ in this analysis.

Fitting conditions: Automatic, background refined
A variance pseudo-Voigt function (peak profile)
Background subtraction method: Fitting method
K$\alpha$2 elimination method: K$\alpha$1/K$\alpha$2 ratio = 0.497
Smoothing method: B-Spline curve
Smoothing conditions: Second derivative method; $\sigma$ cutoff = 3; $\chi$ threshold = 1.5

(Composition Analysis)

Using a commonly used inductively coupled plasma emission spectrometer (instrument name: OPTIMA 7300DV, manufactured by PERKIN ELMER, INC.), composition analysis of a sample was performed. A measurement solution was prepared by dissolving the sample in a mixed solution composed of hydrofluoric acid and nitric acid. Using the resulting measurement solution, the composition of the sample was analyzed. Using the determined composition of the sample, furthermore, the amount of sodium as $Na_2O$ (hereinafter also referred to as "$Na_2O$ content") was determined according to equation (2'') below, and the amount of potassium as $K_2O$ (hereinafter also referred to as "$K_2O$ content") was

determined according to equation (2'") below. In the examples and comparative examples described below, the total of the $Na_2O$ content and the $K_2O$ content corresponds to the total alkali metal content determined according to equation (2) presented earlier.

$$Na_2O \text{ content} = \{(Na_2O)/(SiO_2 + Al_2O_3 + Na_2O + K_2O)\} \times 100 \qquad (2'')$$

$$K_2O \text{ content} = \{(K_2O)/(SiO_2 + Al_2O_3 + Na_2O + K_2O)\} \times 100 \qquad (2''')$$

(Average Crystal Size)

Using a commonly used scanning electron microscope (JSM-IT200, manufactured by JEOL Ltd.), an SEM observation image of a sample was obtained. The SEM observation was performed under the following conditions. Solely based on independently observed smallest unit particles, the average crystal size was calculated by measuring the maximum Feret diameters of the particles and calculating the arithmetic mean of $50 \pm 5$ particles. Secondary aggregate particles (aggregates), which are aggregated forms of primary particles, however, were handled as particles that were not independent and were not used in the calculation of the average crystal size.

Acceleration voltage: 6 kV
Magnification: $10,000 \pm 5,000$ times

(Volume-Based Particle Size Distribution)

For the volume-based particle size distribution, a measurement slurry was prepared by weighing a sample such that the weight of silica and alumina therein was 5 g and diluting the sample with purified water to a total amount of 50 g. The measurement slurry was pretreated under the following conditions using an ultrasonic dispersion device (device name: US-150E ultrasonic homogenizer, manufactured by Nihonseiki Kaisha Ltd.). The pretreated measurement slurry was subjected to measurement under the following conditions using a commonly used a laser diffraction/scattering particle size analyzer (analyzer name: Microtrac MT3300EXII, manufactured by MicrotracBEL Corporation).

Pretreatment conditions

TIP SELECT: 20Φ
LEVEL: 5
Treatment duration: 2 minutes

Volume-based particle size distribution measurement conditions

Measurement range: 0.02 to 2000 $\mu$m
Particle refractive index: 1.66
Particle transparency: Transparent
Particle shape: Non-spherical
Solvent refractive index: 1.333

(Total Amount of Acid Sites)

The measurement of the total amount of acid sites was performed using $NH_3$-TPD. Using a commonly used temperature-programmed desorption analyzer (analyzer name: BELCAT II, manufactured by MicrotracBEL Corporation), the total amount of acid sites in a sample was measured. The sample for measurement was a zeolite (0.05 g) pretreated at 500°C for 1 hour in an atmosphere through which helium gas flew at 50 ml/minute.

<$NH_3$-TPD Measurement>

The measurement of the total amount of acid sites using $NH_3$-TPD was performed under the following conditions. For the pretreated sample for measurement, a mixed gas containing 1% by volume ammonia and 99% by volume helium gas was passed through the sample for measurement at 100°C to allow ammonia to be adsorbed onto the sample for measurement until saturation. After the mixed gas was passed for 30 minutes, the mixed gas was switched to helium gas. By passing helium gas for 15 minutes still at 100°C, removal of residual ammonia in the atmosphere was carried out. After removal of residual ammonia, the temperature was elevated from 100°C to 710°C at a temperature elevation rate of 10°C/minute under a stream of helium at a flow rate of 30 mL/minute. Through this, the ammonia adsorbed on the sample for measurement was desorbed from the sample for measurement. The ammonia desorbed from the sample for measurement was continuously quantified using a gas chromatograph equipped with a thermal conductivity detector (TCD), through which a desorption spectrum for ammonia (TPD spectrum) was obtained.

The TPD spectrum obtained was analyzed by isolating a spectrum indicating ammonia desorbed from the zeolite (sample for measurement) (ammonia desorption spectrum) using commonly used analysis software (software name: Chem Master, Microtrac for Windows ver 1.4.9, manufactured by MicrotracBEL Corporation). Specifically, the ammonia desorption segment of the TPD spectrum was subjected to baseline processing by defining 100°C in the temperature elevation process from 100°C to 710°C as the baseline start and 700°C in the temperature elevation process from 100°C to 710°C as the baseline end. In the TPD spectrum after baseline processing, the spectrum over the ammonia desorption segment (i.e., the range from 100°C to 700°C, both inclusive, in the temperature elevation process) was defined as the ammonia desorption spectrum. The area (integral) of this ammonia desorption spectrum was determined, and it was deemed the amount of ammonia desorbed. By dividing the amount of ammonia desorbed (mmol) by the mass (g) of the sample for measurement used for measurement, the total amount of acid sites in the sample for measurement was obtained.

(Silanol Intensity Ratio)

The silanol intensity ratio was determined from an IR spectrum obtained by FT-IR using a commonly used FT-IR analyzer (analyzer name: Jasco FT/IR-6100, manufactured by JASCO Corporation). The FT-IR for measuring the IR spectrum was performed by shaping a sample into a disk ($0.01$ $g/cm^2$) using a press machine, inserting the disk into a heating unit (device name: 2000-1431 standard light-path spectroscopic IN-SITU cell, manufactured by Makuhari Rikagaku Garasu Inc.), carrying out pretreatment under the conditions of 450°C (sample temperature) for 1 hour in a vacuum and then performing measurement under the following conditions.

Measurement method: Heated transmission
Sample for measurement: 0.01 g
Measuring mode: Continuous scanning
Measuring temperature: 200°C (sample temperature) in a vacuum
Measurement range: 350 to 4000 $cm^{-1}$
Resolution: 2.0 $cm^{-1}$
Number of scans: 128
Zero filling: ON
Detector: TGS (Triglycine sulfate)

The IR spectrum obtained was subjected to waveform processing using commonly used analysis software (Spectra Manager Version 2 Version 2.15.11, manufactured by JASCO Corporation). More specifically, a baseline start was defined as 1580 $cm^{-1}$, and a baseline end was defined as 2100 $cm^{-1}$, a baseline start was defined as 3000 $cm^{-1}$, and a baseline end was defined as 3800 $cm^{-1}$, and these ranges were subjected to baseline correction. Then, in the IR spectrum after baseline processing, the peak $P_1$ having the highest peak-top height intensity was determined from among peaks having their peak top within the range of 1860 ($\pm$ 10) $cm^{-1}$, and the peak $P_2$ having the highest peak-top height intensity was determined from among peaks having their peak top within the range of 3735 ($\pm$ 10) $cm^{-1}$. From the peak-top height intensity $HI_1$ of the determined peak $P_1$ and the peak-top height intensity $HI_2$ of the determined peak $P_2$, the silanol intensity ratio was determined according to equation (1) presented earlier.

(SDA Content)

The SDA content was determined by dividing the mass of the SDA contained in a sample for measurement (SDA mass) by the mass of the sample for measurement (Beta mass) and converting the result to a percentage. The mass of the sample for measurement (Beta mass) used was the dry mass of the sample for measurement dried at 110°C for 4 hours in air atmosphere. The mass of the SDA contained in the sample for measurement (SDA mass) used, furthermore, was the change in mass that occurred when the sample for measurement was heated from 300°C to 700°C. The change in the mass of the sample for measurement was measured using a commonly used differential thermogravimetric analyzer (STA 2500 Regulus, manufactured by NETZSCH) under the following conditions.

Atmosphere: Air
Atmosphere flow rate: 20 cc/minute

Temperature elevation rate: 10°C/minute
Measuring temperature: 20°C to 800°C

(Proton Type)

2 g of a sample for measurement and 18 g of water were mixed, and the resulting mixture was shaken for 1 minute to give a zeolite slurry having a solids concentration of 10% by mass. The pH of the zeolite slurry at a temperature of 25°C (slurry pH) was measured using a commonly used pH meter (device name: F-72S, manufactured by HORIBA, Ltd.). When the measured slurry pH was lower than 7 and when the total alkali metal content was 0.5% by mass or less at the same time, the cation type of the sample for measurement (zeolite) was considered protonic. When the total alkali metal content exceeded 0.5% by mass, furthermore, the cation type of the sample for measurement (zeolite) was considered alkaline.

Example 1

A 35% by mass aqueous solution of tetraethylammonium hydroxide (TEAOH), a 48% by mass aqueous solution of potassium hydroxide, purified water and an amorphous aluminosilicate ($SiO_2/Al_2O_3$ molar ratio: 23.0) were mixed to a total amount of 60 g to give a source composition having the following molar formulation.

$SiO_2/Al_2O_3$ molar ratio: 23.0
$TEA^+/SiO_2$ molar ratio: 0.10
$K/SiO_2$ molar ratio: 0.10
$K/M$ molar ratio: 1.00
$H_2O/SiO_2$ molar ratio: 11
$OH/SiO_2$ molar ratio: 0.20
$F/SiO_2$ molar ratio: 0

Into the resulting source composition, a beta zeolite (HSZ-930NHA, manufactured by Tosoh Corporation; $SiO_2/Al_2O_3$ ratio, 28.0) as a seed crystal was mixed such that the seed crystal content was 1.5% by mass. Thereafter, the seed crystal-mixed source composition was packed in an 80-ml hermetically sealed container and subjected to hydrothermal treatment at 55 rpm and 150°C for 48 hours under autogenous pressure to give a crystallized material. The resulting crystallized material was subjected to solid-liquid separation, washed with purified water in an amount ten times, by mass, the amount of the source composition (excluding the seed crystal) and then dried at 110°C for 4 hours in air atmosphere to yield a dry crystallized material (hereinafter also referred to as "dry material").
The resulting dry material had a $SiO_2/Al_2O_3$ molar ratio of 21.3, a $Na_2O$ content below the lower limit of detection and a $K_2O$ content of 1.15% by mass.
Subsequently, this dry material was dispersed in purified water such that the amount of the dry material was 20% by mass, and the resulting dispersion was suction-filtered using a funnel to form a cake. Through this cake, a 20% by mass aqueous solution of ammonium chloride in an amount five times, by mass, the dry material was passed at 60°C. By bringing the dry material and the aqueous solution of ammonium chloride into contact in this manner, an acid-treated material was obtained. The resulting acid-treated material was washed with purified water in an amount ten times, by mass, the dry material and then dried at 110°C for 4 hours in air. The dried acid-treated material was fired at 700°C for 4 hours in an air atmosphere in which steam constituted 0.2% by volume. In this manner, a beta zeolite of this example was obtained.
This beta zeolite was a beta zeolite having a $SiO_2/Al_2O_3$ molar ratio of 21.3, a $Na_2O$ content below the lower limit of detection and a $K_2O$ content of 0.13% by mass. The average crystal size was 0.31 $\mu$m, the half-width of the XRD main peak was $2\theta = 0.398°$, the total amount of acid sites was 0.97 mmol/g, the silanol intensity ratio was 1.29, and the SDA content was 0.95% by mass. The cation type was protonic. The beta zeolite had the XRD peaks listed in Table 3 below.

[Table 3]

| Lattice spacing d (Å) | Relative intensity (%) |
|---|---|
| 6.60 | 19 |
| 4.14 | 27 |
| 3.95 | 100 |
| 3.51 | 20 |
| 3.29 | 21 |
| 3.10 | 17 |

(continued)

| Lattice spacing d (Å) | Relative intensity (%) |
|---|---|
| 3.02 | 18 |
| * The relative intensity is a relative value with respect to the intensity of the peak at d = 3.95 Å ||

Example 2

A 35% by mass aqueous solution of TEAOH, a 48% by mass aqueous solution of potassium hydroxide, purified water and an amorphous aluminosilicate ($SiO_2/Al_2O_3$ molar ratio: 27.0) were mixed to a total amount of 60 g to give a source composition having the following molar formulation. Except that this source composition was used instead of the source composition used in Example 1, a dry acid-treated material was obtained by the same method as in Example 1.

$SiO_2/Al_2O_3$ molar ratio: 27.0
$TEA^+/SiO_2$ molar ratio: 0.12
$K/SiO_2$ molar ratio: 0.10
K/M molar ratio: 1.00
$H_2O/SiO_2$ molar ratio: 11
$OH/SiO_2$ molar ratio: 0.22
$F/SiO_2$ molar ratio: 0

It should be noted that in this example, the dry crystallized material had a $SiO_2/Al_2O_3$ molar ratio of 25.9, a $Na_2O$ content below the lower limit of detection and a $K_2O$ content of 0.54% by mass.

The resulting acid-treated material (dry acid-treated material) was fired at 600°C for 4 hours in an air atmosphere in which steam constituted 1% by volume. In this manner, a beta zeolite of this example was obtained.

This beta zeolite was a beta zeolite having a $SiO_2/Al_2O_3$ molar ratio of 26.3, a $Na_2O$ content below the lower limit of detection and a $K_2O$ content of 0.12% by mass. The average crystal size was 0.28 $\mu$m, the half-width of the XRD main peak was $2\theta = 0.355°$, the total amount of acid sites was 1.30 mmol/g, the silanol intensity ratio was 1.74, and the SDA content was 1.34% by mass. The cation type was protonic. The beta zeolite had the XRD peaks listed in Table 4 below.

[Table 4]

| Lattice spacing d (Å) | Relative intensity (%) |
|---|---|
| 6.57 | 14 |
| 4.14 | 26 |
| 3.95 | 100 |
| 3.50 | 22 |
| 3.29 | 21 |
| 3.09 | 17 |
| 3.01 | 21 |
| * The relative intensity is a relative value with respect to the intensity of the peak at d = 3.95 Å ||

Comparative Example 1

A beta zeolite was obtained based on the known method for manufacturing a Beta described on IZA (International Zeolite Association) (http://www.iza-online.org/synthesis/). That is, a 48% by mass aqueous solution of sodium hydroxide, sodium aluminate, sodium chloride, potassium chloride, a 35% by mass aqueous solution of TEAOH, fumed silica and purified water were mixed, and a source composition having the following molar formulation was obtained such that the total amount was 60 g.

$SiO_2/Al_2O_3$ molar ratio: 50.0
$TEA^+/SiO_2$ molar ratio: 0.50
$Na/SiO_2$ molar ratio: 0.079
$K/SiO_2$ molar ratio: 0.040

K/M molar ratio: 0.34
$H_2O/SiO_2$ molar ratio: 15
$OH/SiO_2$ molar ratio: 0.56
$F/SiO_2$ molar ratio: 0

The resulting source composition was packed in a hermetically sealed container and subjected to hydrothermal treatment at 55 rpm and 135°C for 36 hours to give a crystallized material. The resulting crystallized material was subjected to solid-liquid separation, washed with purified water in an amount ten times, by mass, the total of the amount of the source composition and then dried at 110°C overnight in air atmosphere to yield a dry crystallized material (dry material).

The resulting dry material had a $SiO_2/Al_2O_3$ molar ratio of 27.6, a $Na_2O$ content of 0.18% by mass and a $K_2O$ content of 0.17% by mass.

This dry material was fired at 600°C for 4 hours in an air atmosphere in which steam constituted 1% by volume to give a fired material.

The fired material was dispersed in purified water such that the amount of the fired material was 20% by mass, and the resulting dispersion was suction-filtered using a funnel to form a cake. Through this cake, a 20% by mass aqueous solution of ammonium chloride in an amount five times, by mass, the fired material was passed at 60°C. By bringing the dry material and the aqueous solution of ammonium chloride into contact in this manner, an acid-treated material was obtained. The resulting acid-treated material was washed with purified water having a mass ten times that of the fired material, dried at 110°C overnight and then fired at 550°C for 4 hours in an air atmosphere in which steam constituted 1% by volume. In this manner, a beta zeolite of this comparative example was obtained.

The resulting beta zeolite was a beta zeolite having a $SiO_2/Al_2O_3$ molar ratio of 31.7, a $Na_2O$ content below the lower limit of detection and a $K_2O$ content below the lower limit of detection. The average crystal size was 0.18 $\mu$m, the half-width of the XRD main peak was $2\theta = 0.598°$, the total amount of acid sites was 0.95 mmol/g, the silanol intensity ratio was 3.77, and the SDA content was 3.20% by mass. The cation type was protonic. The beta zeolite had the XRD peaks listed in Table 5 below.

[Table 5]

| Lattice spacing d (Å) | Relative intensity (%) |
|---|---|
| 6.55 | 16 |
| 4.12 | 36 |
| 3.94 | 100 |
| 3.51 | 28 |
| 3.28 | 28 |
| 3.08 | 22 |
| 3.01 | 24 |
| * The relative intensity is a relative value with respect to the intensity of the peak at d = 3.94 Å | |

Comparative Example 2

Based on the method for manufacturing a beta zeolite described in Example 3 of Japanese Patent No. 5082361, a beta zeolite of this comparative example was obtained. That is, a 35% by mass aqueous solution of TEAOH, a 48% by mass aqueous solution of potassium hydroxide, purified water and an amorphous aluminosilicate ($SiO_2/Al_2O_3$ molar ratio: 28.0) were mixed to a total amount of 60 g to give a source composition having the following molar formulation.

$SiO_2/Al_2O_3$ molar ratio: 28.0
$TEA^+/SiO_2$ molar ratio: 0.30
$K/SiO_2$ molar ratio: 0.10
K/M molar ratio: 1.00
$H_2O/SiO_2$ molar ratio: 9.9
$OH/SiO_2$ molar ratio: 0.40
$F/SiO_2$ molar ratio: 0

Into the resulting source composition, a beta zeolite (HSZ-930NHA, manufactured by Tosoh Corporation; $SiO_2/Al_2O_3$ molar ratio, 28.0) as a seed crystal was mixed such that the seed crystal content was 0.36% by mass.

Thereafter, the seed crystal-mixed source composition was packed in an 80-ml hermetically sealed container and subjected to hydrothermal treatment at 55 rpm and 150°C for 88 hours to give a crystallized material. The resulting crystallized material was subjected to solid-liquid separation, washed with purified water in an amount ten times, by mass, the total of the amount of the source composition and then dried at 110°C overnight in air atmosphere to yield a dry crystallized material (dry material).

The resulting dry material had a $SiO_2/Al_2O_3$ molar ratio of 22.7, a $Na_2O$ content below the lower limit of detection and a $K_2O$ content of 0.50% by mass.

This dry material was fired at 600°C for 4 hours in an air atmosphere in which steam constituted 1% by volume to give a fired material.

The fired material was dispersed in purified water such that the amount of the fired material was 20% by mass, and the resulting dispersion was suction-filtered using a funnel to form a cake. Through this cake, a 20% by mass aqueous solution of ammonium nitrate in an amount five times, by mass, the fired material was passed at 25°C. By bringing the dry material and the aqueous solution of ammonium nitrate into contact in this manner, an acid-treated material was obtained. The resulting acid-treated material was washed with purified water, dried at 110°C overnight in air atmosphere and then fired at 550°C for 4 hours in an air atmosphere in which steam constituted 1% by volume. In this manner, a beta zeolite of this comparative example was obtained.

This beta zeolite was a beta zeolite having a $SiO_2/Al_2O_3$ molar ratio of 26.7, a $Na_2O$ content below the lower limit of detection and a $K_2O$ content below the lower limit of detection. The average crystal size was 0.49 $\mu$m, the half-width of the XRD main peak was $2\theta = 0.501°$, the total amount of acid sites was 1.21 mmol/g, the silanol intensity ratio was 2.37, and the SDA content was 1.41% by mass. The cation type was protonic. The beta zeolite had the XRD peaks listed in Table 6 below.

[Table 6]

| Lattice spacing d (Å) | Relative intensity (%) |
|---|---|
| 6.55 | 16 |
| 4.10 | 30 |
| 3.94 | 100 |
| 3.50 | 24 |
| 3.28 | 26 |
| 3.10 | 21 |
| 3.01 | 21 |
| * The relative intensity is a relative value with respect to the intensity of the peak at d = 3.94 Å | |

Comparative Example 3

Based on the method for manufacturing a beta zeolite described in Example 4 of Japanese Patent No. 5082361, a beta zeolite of this comparative example was obtained. That is, a 35% by mass aqueous solution of TEAOH, a 48% by mass aqueous solution of potassium hydroxide, purified water and an amorphous aluminosilicate ($SiO_2/Al_2O_3$ molar ratio: 28.0) were mixed to a total amount of 60 g to give a source composition having the following molar formulation. Except that this source composition was used instead of the source composition used in Comparative Example 2, a beta zeolite of this comparative example was obtained by the same method as in Comparative Example 2.

$SiO_2/Al_2O_3$ molar ratio: 28.0
$TEA^+/SiO_2$ molar ratio: 0.14
$K/SiO_2$ molar ratio: 0.05
K/M molar ratio: 1.00
$H_2O/SiO_2$ molar ratio: 9.9
$OH/SiO_2$ molar ratio: 0.19
$F/SiO_2$ molar ratio: 0

This beta zeolite was a beta zeolite having a $SiO_2/Al_2O_3$ molar ratio of 31.9, a $Na_2O$ content below the lower limit of detection and a $K_2O$ content below the lower limit of detection. The average crystal size was 0.40 $\mu$m, the half-width of the XRD main peak was 0.478°, the total amount of acid sites was 1.02 mmol/g, the silanol intensity ratio was 2.54, and the SDA content was 1.52% by mass. The cation type was protonic. The beta zeolite had the XRD peaks listed in Table 7 below.

[Table 7]

| Lattice spacing d (Å) | Relative intensity (%) |
|---|---|
| 6.58 | 16 |
| 4.07 | 30 |
| 3.93 | 100 |
| 3.50 | 23 |
| 3.28 | 25 |
| 3.19 | 19 |
| 3.00 | 20 |
| * The relative intensity is a relative value with respect to the intensity of the peak at d = 3.93 Å | |

Comparative Example 4

A dry acid-treated material was obtained by the same method as in Example 1. The resulting acid-treated material was fired (steamed) at 700°C for 1 hour in a mixed gas atmosphere composed of 5% by volume steam and 95% by volume air. In this manner, a beta zeolite of this comparative example was obtained.

This beta zeolite was a beta zeolite having a $SiO_2/Al_2O_3$ molar ratio of 21.3, a $Na_2O$ content below the lower limit of detection and a $K_2O$ content of 0.13% by mass. The average crystal size was 0.28 $\mu$m, the half-width of the XRD main peak was $2\theta = 0.427°$, the total amount of acid sites was 0.70 mmol/g, the silanol intensity ratio was 1.94, and the SDA content was 1.90% by mass. The cation type was protonic. The beta zeolite had the XRD peaks listed in Table 8 below.

[Table 8]

| Lattice spacing d (Å) | Relative intensity (%) |
|---|---|
| 6.58 | 19 |
| 4.07 | 28 |
| 3.94 | 100 |
| 3.51 | 19 |
| 3.29 | 21 |
| 3.09 | 17 |
| 3.01 | 16 |
| * The relative intensity is a relative value with respect to the intensity of the peak at d = 3.94 Å | |

Comparative Example 5

Based on the method for manufacturing a CHA zeolite described in Example 2 of Japanese Patent No. 6977314, a CHA zeolite of this comparative example was obtained. That is, a 50% by mass aqueous solution of dimethylethylcyclohexylammonium bromide (DMECHABr), a 35% by mass aqueous solution of dimethylethylcyclohexylammonium hydroxide (DMECHAOH), a 48% by mass aqueous solution of sodium hydroxide, a 48% by mass aqueous solution of potassium hydroxide, purified water and an amorphous aluminosilicate ($SiO_2/Al_2O_3$ molar ratio: 24.6) were mixed to give a source composition having the following molar formulation.

$SiO_2/Al_2O_3$ molar ratio: 24.6
$DMECHABr/SiO_2$ molar ratio: 0.04
$DMECHAOH/SiO_2$ molar ratio: 0.04
$Na/SiO_2$ molar ratio: 0.04
$K/SiO_2$ molar ratio: 0.08
K/M molar ratio: 0.67
$H_2O/SiO_2$ molar ratio: 15.0
$OH/SiO_2$ molar ratio: 0.16

The resulting source composition was packed in an 80-ml hermetically sealed container and subjected to hydrothermal treatment at 55 rpm and 150°C for 48 hours to give a crystallized material. The resulting crystallized material was subjected to solid-liquid separation, washed with purified water in an amount ten times, by mass, the total of the amount of the source composition and then dried at 110°C overnight in air atmosphere to yield a dry crystallized material (dry material).

The resulting dry material had a $SiO_2/Al_2O_3$ molar ratio of 24.0, a $Na_2O$ content of 0.23% by mass and a $K_2O$ content of 1.19% by mass.

This dry material was placed inside a reaction vessel, and a 20% by mass aqueous solution of ammonium chloride in an amount five times, by mass, the dry material was introduced at 60°C. By bringing the dry material and the aqueous solution of ammonium chloride into contact in this manner, an acid-treated material was obtained. The resulting acid-treated material was washed with purified water in an amount ten times, by mass, the dry material and then dried at 110°C for 4 hours in air. The dried acid-treated material was fired at 600°C for 4 hours in an air atmosphere in which steam constituted 1% by volume. In this manner, a CHA zeolite of this comparative example was obtained.

This CHA zeolite was a CHA zeolite having a $SiO_2/Al_2O_3$ molar ratio of 24.6, a $Na_2O$ content of 0.21% by mass and a $K_2O$ content of 0.94% by mass. The cation type was alkaline. Given this, in the case of a CHA zeolite, alkali metal cations were not efficiently removed, even though a metal cation removal step was performed before an SDA removal step.

Comparative Example 6

Based on the method for manufacturing a beta zeolite described in Example 1 of Japanese Patent No. 5082361, a crystallized material was obtained. That is, a 50% by mass aqueous solution of tetraethylammonium fluoride, a 48% by mass aqueous solution of sodium hydroxide, purified water and an amorphous aluminosilicate ($SiO_2/Al_2O_3$ molar ratio: 23.0) were mixed to a total amount of 60 g to give a source composition having the following molar formulation.

$SiO_2/Al_2O_3$ molar ratio: 23.0
$TEA^+/SiO_2$ molar ratio: 0.67
$Na/SiO_2$ molar ratio: 0.10
$K/M$ molar ratio: 0.00
$H_2O/SiO_2$ molar ratio: 12.0
$OH/SiO_2$ molar ratio: 0.10
$F/SiO_2$ molar ratio: 0.67

Into the resulting source composition, a beta zeolite (HSZ-940NHA, manufactured by Tosoh Corporation; $SiO_2/Al_2O_3$ molar ratio, 40.0) as a seed crystal was mixed such that the seed crystal content was 1.0% by mass. Thereafter, the seed crystal-mixed source composition was packed in an 80-ml hermetically sealed container and subjected to hydrothermal treatment at 55 rpm and 155°C for 72 hours to give a crystallized material. The resulting crystallized material was subjected to solid-liquid separation, washed with purified water in an amount ten times, by mass, the total of the amount of the source composition and dried at 110°C overnight in air atmosphere to yield a dry crystallized material (dry material).

The resulting dry material had a $SiO_2/Al_2O_3$ molar ratio of 26.0, a $Na_2O$ content of 1.80% by mass and a $K_2O$ content below the lower limit of detection.

Subsequently, this dry material was dispersed in purified water such that its amount was 20% by mass, and the resulting dispersion was suction-filtered using a funnel to form a cake. Through this cake, a 20% by mass aqueous solution of ammonium chloride in an amount five times, by mass, the dry material was passed at 60°C. By bringing the dry material and the aqueous solution of ammonium chloride into contact in this manner, an acid-treated material was obtained. The resulting acid-treated material was washed with purified water in an amount ten times, by mass, the dry material and then dried at 110°C for 4 hours in air. The dried acid-treated material was fired at 600°C for 4 hours in an air atmosphere in which steam constituted 1% by volume. In this manner, a beta zeolite of this comparative example was obtained.

This beta zeolite was a beta zeolite having a $SiO_2/Al_2O_3$ molar ratio of 28.0, a $Na_2O$ content of 0.90% by mass and a $K_2O$ content below the lower limit of detection. The average crystal size was 0.73 $\mu$m, the half-width of the XRD main peak was $2\theta = 0.279°$, the total amount of acid sites was 0.84 mmol/g, the silanol intensity ratio was 1.78, and the SDA content was 1.34% by mass. The cation type was alkaline. The beta zeolite had the XRD peaks listed in Table 9 below.

[Table 9]

| Lattice spacing D (Å) | Relative intensity (%) |
|---|---|
| 6.58 | 13 |
| 4.14 | 26 |

(continued)

| Lattice spacing D (Å) | Relative intensity (%) |
|---|---|
| 3.95 | 100 |
| 3.56 | 22 |
| 3.29 | 22 |
| 3.10 | 15 |
| 3.01 | 19 |
| * The relative intensity is a relative value with respect to the intensity of the peak at d = 3.95 Å | |

Comparative Example 7

A source composition was crystallized to give a crystallized material by the same method as in Comparative Example 6. Except that the resulting crystallized material was used instead of the crystallized material used in Comparative Example 1, a beta zeolite of this comparative example was obtained by the same method as in Comparative Example 1.

This beta zeolite was a beta zeolite having a $SiO_2/Al_2O_3$ molar ratio of 36.8, a $Na_2O$ content of 0.17% by mass and a $K_2O$ content below the lower limit of detection. The average crystal size was 0.73 $\mu$m, the half-width of the XRD main peak was $2\theta = 0.279°$, the total amount of acid sites was 0.88 mmol/g, the silanol intensity ratio was 2.00, and the SDA content was 1.58% by mass. The cation type was protonic. The beta zeolite had the XRD peaks listed in Table 10 below.

[Table 10]

| Lattice spacing d (Å) | Relative intensity (%) |
|---|---|
| 6.59 | 9 |
| 4.15 | 24 |
| 3.96 | 100 |
| 3.51 | 20 |
| 3.29 | 21 |
| 3.11 | 14 |
| 3.02 | 19 |
| * The relative intensity is a relative value with respect to the intensity of the peak at d = 3.96 Å | |

Comparative Example 8

A beta zeolite was obtained based on Example 4 of Japanese Unexamined Patent Application Publication No. 2012-136409 (JP 2012-136409 A). That is, a 35% by mass aqueous solution of TEAOH, a 48% by mass aqueous solution of sodium hydroxide, purified water and an amorphous aluminosilicate ($SiO_2/Al_2O_3$ molar ratio: 28.0) were mixed to a total amount of 60 g to give a source composition having the following molar formulation.

$SiO_2/Al_2O_3$ molar ratio: 28.0
$TEA^+/SiO_2$ molar ratio: 0.13
$Na/SiO_2$ molar ratio: 0.10
K/M molar ratio: 0.00
$H_2O/SiO_2$ molar ratio: 10.0
$OH/SiO_2$ molar ratio: 0.23

A tetraethylammonium solution (hereinafter also referred to as "TEA solution"), furthermore, was prepared as a seed crystal. More specifically, precipitated silica, aluminum hydroxide, a 35% by mass aqueous solution of TEAOH and purified water were mixed to a total amount of 60 g to give a seed-crystal source composition having the following molar formulation.

$SiO_2/Al_2O_3$ molar ratio: 50.0
$TEA^+/SiO_2$ molar ratio: 0.40
$H_2O/SiO_2$ molar ratio: 6.5
$OH/SiO_2$ molar ratio: 0.40

The resulting seed-crystal source composition was packed in an 80-ml hermetically sealed container and subjected to hydrothermal treatment at 55 rpm and 150°C for 4 hours to give a TEA solution. The TEA solution was a highly transparent, viscous brown solution containing a solid component having a peak at 0.15 $\mu$m on a volume-based particle size distribution curve in laser diffraction.

The TEA solution as a seed crystal was mixed into the source composition such that the silica and alumina solids content of the TEA solution was 5.0% by mass relative to the source composition. Then the resulting mixture was packed in an 80-ml hermetically sealed container and subjected to hydrothermal treatment at 55 rpm and 150°C for 50 hours to give a crystallized material. The resulting crystallized material was subjected to solid-liquid separation, washed with purified water in an amount ten times, by mass, the amount of the source composition (including the seed crystal) and then dried at 110°C for 4 hours in air atmosphere to yield a dry material.

The resulting dry material had a $SiO_2/Al_2O_3$ molar ratio of 25.8, a $Na_2O$ content of 0.38% by mass and a $K_2O$ content below the lower limit of detection.

Subsequently, this dry material was dispersed in purified water such that the amount of the dry material was 20% by mass, and the resulting dispersion was suction-filtered using a funnel to form a cake. Through this cake, a 10% by mass aqueous solution of ammonium chloride in an amount ten times, by mass, the dry material was passed at 60°C, whereby an acid-treated material was obtained. The resulting acid-treated material was washed with purified water in an amount ten times, by mass, the dry material and then dried at 110°C for 4 hours in air to give an acid-treated material. This material, furthermore, was fired at 600°C for 4 hours in an air atmosphere in which steam constituted 1% by volume. In this manner, a beta zeolite of this comparative example was obtained.

This beta zeolite was a beta zeolite having a $SiO_2/Al_2O_3$ molar ratio of 25.9, a $Na_2O$ content of 0.03% by mass and a $K_2O$ content below the lower limit of detection. The average crystal size was 0.09 $\mu$m, the half-width of the XRD main peak was $2\theta = 0.504°$, the total amount of acid sites was 1.16 mmol/g, the silanol intensity ratio was 2.95, and the SDA content was 2.08% by mass. The cation type was protonic. The beta zeolite had the XRD peaks listed in Table 11 below.

[Table 11]

| Lattice spacing d (Å) | Relative intensity (%) |
|---|---|
| 6.53 | 14 |
| 4.11 | 29 |
| 3.95 | 100 |
| 3.51 | 22 |
| 3.29 | 21 |
| 3.10 | 20 |
| 3.01 | 22 |
| * The relative intensity is a relative value with respect to the intensity of the peak at d = 3.95 Å | |

Comparative Example 9

A source composition was crystallized to give a crystallized material by the same method as in Example 1. The resulting crystallized material was subjected to solid-liquid separation, and a dry material was obtained at 110°C. Based on a known publication (Microporous and Mesoporous Materials 48 (2001) 57-64), 1.0 g of the resulting dry material was dispersed in 500 ml of a 50% by volume aqueous solution of acetic acid in a 1-L recovery flask to form a zeolite-dispersed slurry. The slurry was subjected to acid treatment by stirring it at 80°C for 24 hours, whereby an acid-treated material was obtained.

The acid-treated material was isolated from the zeolite-dispersed slurry after acid treatment by solid-liquid separation and washed with purified water in an amount ten times, by mass, that of the dry material used. The washed acid-treated material was dried at 110°C for 4 hours in air atmosphere to give a dry acid-treated material. The dry acid-treated material was fired at 600°C for 4 hours in an air atmosphere in which steam constituted 1% by volume. In this manner, a beta zeolite of this comparative example was obtained.

This beta zeolite was a beta zeolite having a $SiO_2/Al_2O_3$ molar ratio of 22.0, a $Na_2O$ content below the lower limit of detection and a $K_2O$ content of 0.08% by mass. The average crystal size was 0.31 um, the half-width of the XRD main peak was $2\theta = 0.407°$, the total amount of acid sites was 1.38 mmol/g, the silanol intensity ratio was 1.95, and the SDA content was 1.09% by mass. The cation type was protonic. The beta zeolite had the XRD peaks listed in Table 12 below.

[Table 12]

| Lattice spacing d (Å) | Relative intensity (%) |
|---|---|
| 6.56 | 14 |
| 4.13 | 28 |
| 3.94 | 100 |
| 3.49 | 23 |
| 3.29 | 24 |
| 3.10 | 19 |
| 3.01 | 22 |
| * The relative intensity is a relative value with respect to the intensity of the peak at d = 3.94 Å | |

Evaluation results for the examples and comparative examples are presented in Tables 13a and 13b below. It should be noted that in Tables 13a and 13b below, N.D. denotes below the lower limit of detection (less than 0.01% by mass).

[Table 13a]

| | Crystal structure | $SiO_2/Al_2O_3$ molar ratio (mol/mol) | $Na_2O$ content (% by mass) | $K_2O$ content (% by mass) | Total alkali metal content (% by mass) | Silanol intensity ratio (-) | SDA content (% by mass) |
|---|---|---|---|---|---|---|---|
| Example 1 | Beta | 21.3 | N.D. | 0.13 | 0.13 | 1.29 | 0.95 |
| Example 2 | Beta | 26.3 | N.D. | 0.12 | 0.12 | 1.74 | 1.34 |
| Comparative Example 1 | Beta | 31.7 | N.D. | N.D. | N.D. | 3.77 | 3.20 |
| Comparative Example 2 | Beta | 26.7 | N.D. | N.D. | N.D. | 2.37 | 1.41 |
| Comparative Example 3 | Beta | 31.9 | N.D. | N.D. | N.D. | 2.54 | 1.52 |
| Comparative Example 4 | Beta | 21.3 | N.D. | 0.13 | 0.13 | 1.94 | 1.90 |
| Comparative Example 5 | CHA | 24.6 | 0.21 | 0.94 | 1.15 | - | - |
| Comparative Example 6 | Beta | 28.0 | 0.90 | N.D. | 0.90 | 1.78 | 1.34 |
| Comparative Example 7 | Beta | 36.8 | 0.17 | N.D. | 0.17 | 2.00 | 1.58 |
| Comparative Example 8 | Beta | 25.9 | 0.03 | N.D. | 0.03 | 2.95 | 2.08 |
| Comparative Example 9 | Beta | 22.0 | N.D. | 0.08 | 0.08 | 1.95 | 1.09 |

[Table 13b]

| | XRD main peak half-width (°) | Average crystal size ($\mu$m) | Total amount of acid sites (mmol/g) | Cation type |
|---|---|---|---|---|
| Example 1 | 0.398 | 0.31 | 0.97 | Protonic |
| Example 2 | 0.355 | 0.28 | 1.3 | Protonic |
| Comparative Example 1 | 0.598 | 0.18 | 0.95 | Protonic |
| Comparative Example 2 | 0.501 | 0.49 | 1.21 | Protonic |
| Comparative Example 3 | 0.478 | 0.40 | 1.02 | Protonic |

(continued)

| | XRD main peak half-width (°) | Average crystal size (μm) | Total amount of acid sites (mmol/g) | Cation type |
|---|---|---|---|---|
| Comparative Example 4 | 0.427 | 0.28 | 0.70 | Protonic |
| Comparative Example 5 | - | - | - | Alkaline |
| Comparative Example 6 | 0.279 | 0.73 | 0.84 | Alkaline |
| Comparative Example 7 | 0.279 | 0.73 | 0.88 | Protonic |
| Comparative Example 8 | 0.504 | 0.09 | 1.16 | Protonic |
| Comparative Example 9 | 0.407 | 0.31 | 1.38 | Protonic |

From these results, it was understood that beta zeolites obtained using the manufacturing method according to this embodiment have a low silanol intensity ratio and a high total amount of acid sites.

Measurement Example

A 35% by mass aqueous solution of iron(III) nitrate and each beta zeolite of the examples and comparative examples were mixed such that the percentage by mass of the amount of iron (Fe) relative to the total of the amount of silicon (Si) as $SiO_2$, the amount of aluminum (Al) as $Al_2O_3$ and the amount of iron (Hereinafter also referred to as "Fe content.") was 3.0% by mass, and the resulting mixtures were dried at 110°C for 4 hours in air atmosphere. The resulting dry materials were fired at 500°C for 4 hours in air atmosphere to give iron-containing beta zeolites. Each resulting iron-containing beta zeolite was designated as a sample for measurement for use in the study described below (sample for measurement before hydrothermal aging treatment). Each resulting iron-containing beta zeolite was an iron-supporting beta zeolite having an Fe content of 3.0% by mass. It should be noted that in this measurement example, the Fe content corresponds to the amount of the active metal element mentioned earlier.

(Hydrothermal Aging Treatment)

The sample for measurement (sample for measurement before hydrothermal aging treatment) was shaped and ground into aggregate particles having an aggregate size of 12 to 20 mesh. 3 mL of the aggregate particles as the sample for measurement was packed in an atmospheric-pressure fixed-bed flow reaction column, and then a mixed gas containing 10% by volume steam and 90% by volume air was passed, whereby hydrothermal aging treatment was carried out under the following conditions. After hydrothermal aging treatment, the sample for measurement was collected from the atmospheric-pressure fixed-bed flow reaction column. This sample was designated as a sample for measurement after hydrothermal aging treatment.

Flow rate of the mixed gas: 300 mL/minute
Treatment temperature: 700°C
Treatment duration: 20 hours

(Percentage Nitrogen Oxides Reduction (%))

1.5 mL each of the samples for measurement before and after hydrothermal aging treatment was packed in an atmospheric-pressure fixed-bed flow reaction column. While the sample was maintained at the measuring temperatures specified below, a nitrogen oxides-containing gas was passed, and the nitrogen oxides concentrations at the inlet and outlet of the atmospheric-pressure fixed-bed flow reaction column were measured. The conditions for the flow of the nitrogen oxides-containing gas are as follows.

Composition of the nitrogen oxides-containing gas: NO, 200 ppm

$NH_3$, 200 ppm
$O_2$, 10% by volume
$H_2O$, 3% by volume
$N_2$, balance

Flow rate of the nitrogen oxides-containing gas: 1.5 L/minute
Space velocity: 60,000 hr$^{-1}$
Measuring temperatures: 600°C, 550°C, 500°C, 400°C, 300°C, 200°C, 150°C, stepwise temperature lowering

From the nitrogen oxides concentrations obtained, the percentage nitrogen oxides reduction was determined according to equation (4) below.

Percentage nitrogen oxides reduction (%) = {([NOx]in - [NOx]out)/[NOx]in} × 100          (4)

In equation (4) above, [NOx]in is the nitrogen oxides concentration [ppm] of the nitrogen oxides-containing gas at the inlet of the atmospheric-pressure fixed-bed flow reaction column, and [NOx]out is the nitrogen oxides concentration [ppm] of the nitrogen oxides-containing gas at the outlet of the atmospheric-pressure fixed-bed flow reaction column.

The percentage nitrogen oxides reduction for each sample for measurement before hydrothermal aging treatment (Hereinafter also referred to as "fresh sample.") and each sample for measurement after hydrothermal aging treatment (Hereinafter also referred to as "aged sample.") is presented in Table 14 below. In Table 14 below, 200°C and 600°C represent measuring temperatures.

[Table 14]

|  | Fresh sample | | Aged sample | |
| --- | --- | --- | --- | --- |
|  | 200°C | 600°C | 200°C | 600°C |
| Example 1 | 76.1 | 88.7 | 52.2 | 93.9 |
| Example 2 | 69.3 | 90.4 | 45.4 | 90.4 |
| Comparative Example 1 | 69.1 | 87.8 | 28.3 | 89.7 |
| Comparative Example 3 | 71.2 | 89.3 | 38.3 | 91.9 |
| Comparative Example 4 | 61.5 | 87.0 | 37.5 | 93.0 |
| Comparative Example 6 | 59.4 | 91.0 | 34.2 | 93.1 |
| Comparative Example 7 | 62.3 | 91.5 | 37.2 | 93.7 |

The iron-containing beta zeolites of the examples, compared with the iron-containing beta zeolites of the comparative examples, exhibited a higher percentage nitrogen oxides reduction under activity at 200°C after hydrothermal aging treatment. From this, it was understood that the iron-containing beta zeolites of the examples are superior in hydrothermal durability. The iron-containing beta zeolites of the examples, furthermore, exhibited a higher percentage nitrogen oxides reduction under activity at 200°C and 600°C before hydrothermal aging treatment, compared with the iron-containing beta zeolite of Comparative Example 4, in which steaming was performed. From this, it was also understood that the iron-containing beta zeolites of the examples exhibit excellent catalytic activity like known low-silica beta zeolites, without accelerated aluminum desorption as seen with the iron-containing beta zeolite of Comparative Example 4, in which steaming was performed. From these results, it was found that beta zeolites according to this embodiment, which have a total alkali metal content of 0.5% by mass or less, an SDA content of 4.0% by mass or less, a $SiO_2/Al_2O_3$ ratio of 20 or greater and 35 or less and a silanol intensity ratio of 1.90 or less, exhibit excellent catalytic activity and excellent hydrothermal durability.

In general, it is known that zeolites having a low $SiO_2/Al_2O_3$ molar ratio exhibit low hydrothermal durability. Surprisingly, however, even beta zeolites having a low $SiO_2/Al_2O_3$ ratio, such as that of Example 1, exhibited a high percentage nitrogen oxides reduction under activity at 200°C after hydrothermal aging treatment. It is, furthermore, considered that zeolites generally tend to contain an increased amount of silanol defects with decreasing $SiO_2/Al_2O_3$ molar ratio. In Example 2, however, the $SiO_2/Al_2O_3$ molar ratio was lower than in Comparative Example 1, but, surprisingly, the silanol intensity ratio was lower than in Comparative Example 1. The beta zeolite of this example exhibited a high percentage nitrogen oxides reduction under activity at 200°C after hydrothermal aging treatment.

From these results, it was understood that beta zeolites according to this embodiment are suitable for use as solid acid catalysts and even are suitable for use as nitrogen oxides-reducing catalysts.

**Claims**

1. A beta zeolite having a total alkali metal content of 0.5% by mass or less, an organic structure-directing agent content of 4.0% by mass or less, a silica-to-alumina molar ratio of 20 or greater and 35 or less and a ratio of height intensity of a peak having a peak top at 3735 ± 10 cm$^{-1}$ to height intensity of a peak having a peak top at 1860 ± 10 cm$^{-1}$ in an IR spectrum of 1.90 or less.

2. The beta zeolite according to Claim 1, wherein a half-width of an X-ray diffraction peak having a peak top at d = 3.95 ± 0.10 Å in an X-ray diffraction pattern obtained using CuK$\alpha$ radiation as an X-ray source is 2$\theta$ = 0.475° or less.

3. The beta zeolite according to Claim 1 or 2, wherein a total amount of acid sites is 0.75 mmol/g or more and 1.70 mmol/g or less.

4. The beta zeolite according to any one of Claims 1 to 3, wherein an average crystal size is 0.70 $\mu$m or less.

5. A method for manufacturing the beta zeolite according to any one of Claims 1 to 4, the method comprising:

   a step of crystallizing a composition containing a silica source, an alumina source, a potassium source, an organic structure-directing agent source and water and having a silica-to-alumina molar ratio of 20 or greater and 60 or less and a fluorine-to-silica molar ratio of 0.01 or less to obtain a crystallized material;
   a step of bringing the crystallized material and an ammonium-containing solution into contact to obtain an acid-treated material; and
   a step of firing the acid-treated material at 400°C or above and 800°C or below in an atmosphere in which steam constitutes less than 5% by volume.

Europäisches
Patentamt
European
Patent Office
Office européen
des brevets

# EUROPEAN SEARCH REPORT

**Application Number**

EP 25 20 8482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 136409 A (TOSOH CORP) 19 July 2012 (2012-07-19) * claim 1; figures 2-4; examples 1-5 * * the whole document * | 1-5 | INV. C01B39/02 B01J29/064 B01J29/70 B01J37/08 C01B39/48 |
| X | CHAIKITTISILP W ET AL: "Crystallization behavior of zeolite beta with balanced incorporation of silicon and aluminum synthesized from alkali metal cation-free mixture", MICROPOROUS AND MESOPOROUS MATERIALS, ELSEVIER, AMSTERDAM ,NL, vol. 116, no. 1-3, 1 December 2008 (2008-12-01), pages 188-195, XP025563128, ISSN: 1387-1811, DOI: 10.1016/J.MICROMESO.2008.04.001 [retrieved on 2008-04-06] | 1-4 | |
| A | * point 2.1; page 189, left-hand column; figures 1-8; tables 1-4 * * the whole document * | 5 | |
| X | DE BAERDEMAEKER TREES ET AL: "Catalytic applications of OSDA-free Beta zeolite", JOURNAL OF CATALYSIS, ACADEMIC PRESS, DULUTH, MN, US, vol. 308, 21 June 2013 (2013-06-21), pages 73-81, XP028782849, ISSN: 0021-9517, DOI: 10.1016/J.JCAT.2013.05.025 | 1-4 | |
| A | * point 3.1; page 74, right-hand column * * the whole document * | 5 | |

**TECHNICAL FIELDS SEARCHED (IPC)**

C01B
B01J

The present search report has been drawn up for all claims

| Place of search | Date of completion of the search | Examiner |
|---|---|---|
| The Hague | 3 March 2026 | Follens, Lana |

EPO FORM 1503 03.82 (P4C01)

## ANNEX TO THE EUROPEAN SEARCH REPORT
## ON EUROPEAN PATENT APPLICATION NO.

EP 25 20 8482

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2026

| Patent document cited in search report | Publication date | Patent family member(s) | | Publication date |
|---|---|---|---|---|
| JP 2012136409 A | 19-07-2012 | JP | 5760435 B2 | 12-08-2015 |
| | | JP | 2012136409 A | 19-07-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021146226 A
- JP 5082361 B
- JP 6977314 B
- JP 2012136409 A

**Non-patent literature cited in the description**

- *J. Phys. Chem. C*, 2011, vol. 115, 8005-8013
- *Microporous and Mesoporous Materials*, 2001, vol. 48, 57-64